# EUROPEAN PATENT APPLICATION

(11) **EP 4 195 823 A1**
(43) Date of publication of application: **14.06.2023**
(21) Application number: 21852832.1
(22) Date of filing: 05.08.2021
(51) Int. Cl.: H04W 72/04, H04W 76/14, H04W 76/28

(54) **INFORMATION DETERMINATION METHOD AND APPARATUS, AND TERMINAL**

(30) Priority: 05.08.2020 CN 202010778611
(71) Applicant: Vivo Mobile Communication Co., Ltd., Dongguan, Guangdong 523863 (CN)
(72) Inventor: LIU, Siqi, Dongguan, Guangdong 523863 (CN); JI, Zichao, Dongguan, Guangdong 523863 (CN); LIU, Shixiao, Dongguan, Guangdong 523863 (CN); ZENG, Yu, Dongguan, Guangdong 523863 (CN)
(74) Representative: Conti, Marco
(86) International application number: PCT/CN2021/110894
(87) International publication number: WO 2022/028532

(57) **Abstract**

This application discloses an information determining method and apparatus, and a terminal. A specific implementation solution includes: obtaining, by a terminal, a first resource in a target configuration; and performing a first operation based on the first resource, where the first operation includes at least one of the following: performing target monitoring and determining a target quantity; and the target configuration includes an activity time and/or an inactivity time.

## Description

### CROSS-REFERENCE TO RELATED APPLICATIONS

This application claims priority to Chinese Patent Application No. 202010778611.4, filed in China on August 5, 2020, which is incorporated herein by reference in its entirety.

### TECHNICAL FIELD

This application pertains to the field of communications technologies, and specifically, relates to an information determining method and apparatus, and a terminal.

### BACKGROUND

Currently, to save power, some power saving mechanisms are often introduced. For example, a discontinuous reception (Discontinuous Reception, DRX) mechanism is introduced in sidelink (sidelink, SL) transmission to control sending and/or receiving of SL data. Introduction of these power-saving mechanisms means that a terminal may be unable to send and receive data for a period of time. In this case, if an existing method is used to calculate a target quantity such as a channel busy rate (Channel Busy Rate, CBR) based on a measurement result of the terminal, an inaccurate calculation result is caused, and normal progress of a transmission process is affected.

### SUMMARY

An objective of embodiments of this application is to provide an information determining method and apparatus, and a terminal, to resolve a problem of how to determine a target quantity after a power saving mechanism is introduced.

According to a first aspect, an information determining method is provided and includes:
obtaining, by a terminal, a first resource in a target configuration; and
performing, by the terminal, a first operation based on the first resource, where
the first operation includes at least one of the following: performing target monitoring and determining a target quantity; and
the target configuration includes an activity time and/or an inactivity time.

According to a second aspect, an information determining apparatus is provided and includes:
an obtaining module, configured to obtain a first resource in a target configuration; and
a first execution module, configured to perform a first operation based on the first resource, where
the first operation includes at least one of the following: performing target monitoring and determining a target quantity; and
the target configuration includes an activity time and/or an inactivity time.

According to a third aspect, a terminal is provided, where the terminal includes a processor, a memory, and a program or instructions stored in the memory and capable of running on the processor, where when the program or instructions are executed by the processor, the steps of the method according to the first aspect are implemented.

According to a fourth aspect, a readable storage medium is provided, where the readable storage medium stores a program or instructions, and when the program or instructions are executed by a processor, the steps of the method according to the first aspect are implemented.

According to a fifth aspect, a chip is provided, where the chip includes a processor and a communications interface, the communications interface is coupled to the processor, and the processor is configured to run a program or instructions to implement the steps of the method according to the first aspect.

In the embodiments of this application, the terminal may obtain the first resource in the target configuration, and perform target monitoring and/or determine the target quantity based on the first resource, where the target configuration includes the activity time and/or the inactivity time. Therefore, when target monitoring is performed and/or the target quantity is determined, impact of a power-saving mechanism can be considered. This ensures a reliable measurement result and/or calculation result, enables the terminal to determine an appropriate transmission mechanism and resource selection policy, and ensures normal progress of a transmission process.

### BRIEF DESCRIPTION OF DRAWINGS

FIG. 1 is a block diagram of a wireless communications system according to an embodiment of this application;
FIG. 2 is a flowchart of an information determining method according to an embodiment of this application;
FIG. 3A is a first sequence diagram in a specific example of this application;
FIG. 3B is a second sequence diagram in a specific example of this application;
FIG. 4A is a third sequence diagram in a specific example of this application;
FIG. 4B is a fourth sequence diagram in a specific example of this application;
FIG. 4C is a fifth sequence diagram in a specific example of this application;
FIG. 5 is a schematic structural diagram of an information determining apparatus according to an embodiment of this application;
FIG. 6 is a schematic structural diagram of a terminal according to an embodiment of this application; and
FIG. 7 is a schematic structural diagram of another terminal according to an embodiment of this application.

### DESCRIPTION OF EMBODIMENTS

The following clearly and completely describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application without creative efforts shall fall within the protection scope of this application.

The terms "first", "second", and the like in this specification and claims of this application are used to distinguish between similar objects instead of describing a specific order or sequence. It should be understood that the terms used in this way are interchangeable in appropriate circumstances, so that the embodiments of this application can be implemented in other orders than the order illustrated or described herein. In addition, objects distinguished by "first" and "second" usually fall within one class, and a quantity of objects is not limited. For example, there may be one or more first objects. In addition, the term "and/or" in the specification and claims indicates at least one of connected objects, and the character "/" generally represents an "or" relationship between associated objects.

It should be noted that technologies described in the embodiments of this application are not limited to a long time evolution (Long Term Evolution, LTE)/LTE-Advanced (LTE-Advanced, LTE-A) system, and can also be used in other wireless communications systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. The described technologies may be used for the foregoing systems and radio technologies, and may also be used for other systems and radio technologies. However, in the following descriptions, a new radio (New Radio, NR) system is described for an illustration purpose, and NR terms are used in most of the following descriptions, although these technologies may also be applied to other applications than an NR system application, for example, a 6th Generation (6th Generation, 6G) communications system.

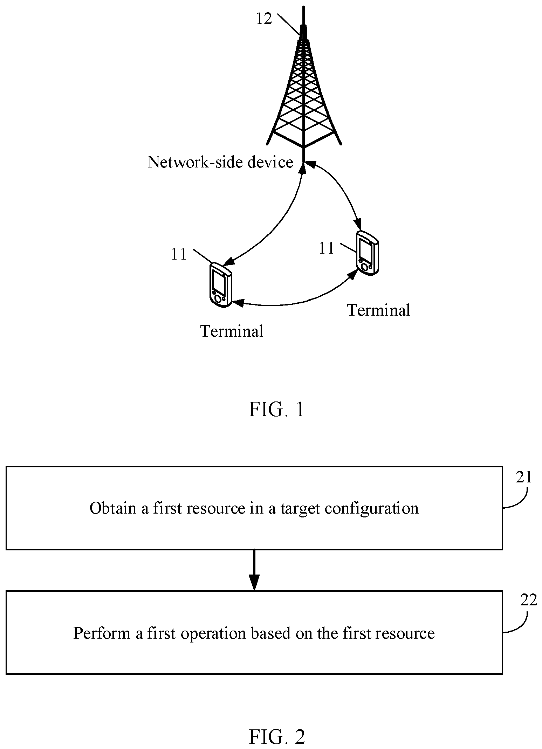

FIG. 1 is a block diagram of a wireless communications system to which an embodiment of this application may be applied. The wireless communications system includes a terminal 11 and a network-side device 12. The terminal 11 may also be referred to as a terminal device or a user terminal (User Equipment, UE). The terminal 11 may be a terminal-side device such as a mobile phone, a tablet computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device), a vehicular device (Vehicle User Equipment, VUE), or a pedestrian terminal (Pedestrian User Equipment, PUE). The wearable device includes a hand ring, an earphone, glasses, or the like. It should be noted that a specific type of the terminal 11 is not limited in the embodiments of this application. The network-side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a WLAN access point, a Wi-Fi node, a transmission and reception point (Transmission and Reception Point, TRP), or another appropriate term in the art, as long as the same technical effect is achieved. The base station is not limited to specific technical terms. It should be noted that in the embodiments of this application, only a base station in an NR system is used as an example, but a specific type of the base station is not limited.

For ease of understanding of the embodiments of this application, the following content is first described.

Scenarios to which the embodiments of this application are applicable include but are not limited to SL transmission scenarios, such as LTE SL transmission scenarios and NR SL transmission scenarios. For example, the embodiments may also be used for an SL in an unlicensed frequency band, peer-to-peer (Peer to Peer, P2P) communication, network-controlled interactive services (Network Controlled Interactive Services, NCIS), and the personal Internet of Things (personal IOT, PIOT).

Power saving mechanisms used in the embodiments of this application include but are not limited to an SL DRX mechanism, a partial sensing (partial sensing) mechanism, a sensing (sensing) mechanism, and the like. Sensing may also be interpreted as detection. An appropriate resource is determined by detecting control information.

Methods for obtaining all information mentioned in this application include but are not limited to methods such as terminal configuration through a base station, scheduling or indication by a scheduling terminal, preconfiguration, inter-terminal negotiation, protocol specification, and terminal self-determining.

In the embodiments of this application, an SL DRX configuration may be obtained by using methods such as terminal configuration through a base station, scheduling or indication by a scheduling terminal, preconfiguration, inter-terminal negotiation, protocol specification, and terminal self-determining. The SL DRX configuration may include at least one of the following duration (which may also be referred to as a timer): on duration (on duration), off duration (off duration), a round-trip time (Round-Trip Time, RTT) timer (RTT timer), an inactivity timer (inactivity timer), a retransmission timer (Retransmission timer), a long cycle (long cycle), a short cycle (short cycle), and the like.

Optionally, the SL DRX configuration may be used to control the terminal's sensing (sensing), detection, and/or transmission of a target object, where the transmission is receiving or sending. The target object may include at least one of the following: a control signal/channel, a data signal/channel, a reference signal, a feedback signal/channel, a request, a response message, and the like. For example, the target object includes but is not limited to sidelink control information (Sidelink Control Information, SCI), a physical sidelink shared channel (Physical Sidelink Shared Channel, PSSCH), a physical sidelink control channel (Physical Sidelink Control Channel, PSCCH), an SL reference signal (reference signal, RS), a physical sidelink feedback channel (Physical Sidelink Feedback Channel, PSFCH), a sidelink synchronization signal block (Sidelink-synchronization signal and PBCH Block, S-SSB), channel state information (Channel State Information, CSI), or a connection establishment response. The SCI may include at least one of first stage SCI (1st stage SCI) and second stage SCI (2nd stage SCI).

Optionally, SL DRX may be divided into an active time and/or an inactive time. The terminal measures, monitors, and/or transmits the target object within the active time. The terminal does not measure, monitor, and/or transmit the target object within the inactive time.

Optionally, the active time and the inactive time may be defined for the target object. To be specific, active times of different target objects may be the same or different, and inactive times of different target objects may be the same or different.

Optionally, the active time and the inactive time may be defined for a transmission direction. To be specific, active times of sending and receiving may be the same or different, and inactive times of sending and receiving may be the same or different. Some target objects or transmission directions may have only active times but have no inactive time.

For example, in an optional implementation, SCI may be sent at any time.

For example, reception of control and/or data is limited by the active time of DRX, but control and/or data may be sent within the active time and inactive time (for example, sending of control and/or data is not limited by the inactive time), but is limited by a selection window.

Optionally, the active time may include at least one of the following: on duration, a runtime when the inactivity timer runs, a runtime when the retransmission timer runs, a runtime of T400, and a round-trip latency time of a CSI report (such as sl-LatencyBoundCSI-Report).

Optionally, the inactive time may include at least one of the following: off duration, a runtime when the RTT timer runs, a non-partial sensing window (non-partial sensing window) part, a non-sensing time, and the like. The non-partial sensing time may be interpreted as a part between two possible or two enabled partial sensing windows. The non-sensing time may be understood as a time not used for sensing. Optionally, the non-partial sensing window (non-partial sensing window) part, the non-sensing time, or the like is a time outside a selection time, that is, it is not considered that the selection time belongs to the non-partial sensing window (non-partial sensing window) part or the non-sensing time.

In the embodiments of this application, an SL partial sensing (partial sensing) configuration may be obtained by using methods such as terminal configuration through a base station, scheduling or indication by a scheduling terminal, preconfiguration, inter-terminal negotiation, protocol specification, and terminal self-determining. One SL partial sensing configuration includes one or more SL partial sensing windows. The SL partial sensing configuration corresponds to one or more selection windows (selection window).

Optionally, a measurable resource may be a (for example, logical or physical) resource within an active time (for example, corresponding to receiving or sending), and preferably at least an active time for receiving a control channel and/or a data channel, for example, an active time for receiving a PSCCH and/or a PSSCH.

Optionally, an unmeasurable resource may be a resource within an inactive time, and preferably at least an inactive time for receiving a control channel and/or a data channel, for example, an inactive time for receiving a PSCCH and/or a PSSCH.

In the embodiments of this application, a ratio between A and B or a ratio between A and B may be A÷B or B÷A.

A resource mentioned in the embodiments of this application includes a time domain resource and/or a frequency domain resource. The frequency domain resource may be a resource on one or more time domain resources. The frequency domain resource may be one or more subchannels, resource blocks (Resource Block, RB), RB groups, interlaces (interlaces), or frequency combs (combs). The time domain resource may be one or more symbols, slots (slot), mini-slots (mini-slot), milliseconds (ms), subframes (subframe), frames (frame), periodicities (periodicity), channel occupancy time (Channel Occupancy Time, COT), or the like. The time domain resource may be a physical time domain resource or a logical time domain resource. For example, a slot may be a physical slot or a logical slot. The time/frequency domain resource may be a single slot resource that occupies X subchannels or RBs.

Optionally, the duration mentioned in the embodiments may be understood as a quantity of included resources, a quantity of included physical resources, a quantity of included measurable resources, and/or a quantity of included logical resources, or the like. For example, the duration further includes a quantity of time domain resources, a quantity of physical time domain resources, a quantity of measurable time domain resources, and/or a quantity of logical time domain resources.

Optionally, the resource mentioned in the embodiments may include at least one of the following: a measurable resource, a physical resource, a logical resource, and the like.

Optionally, a sidelink SL mentioned in the embodiments may also be referred to as a direct link, a secondary link, a sidelink, a side link, or the like.

Optionally, a target quantity mentioned in the embodiments includes but is not limited to a channel busy rate (Channel Busy Rate, CBR), a channel occupancy ratio (Channel occupancy Ratio, CR), a resource allocation rate or limit, a resource scheduling rate or limit, a resource indication rate or limit, a resource recommendation rate or limit, or the like. The limit may be understood as an upper limit or a lower limit. For example, the target quantity is a calculation result corresponding to resources allocated, scheduled, indicated, and/or recommended by one or more base stations (or optionally a terminal or a device A) in a time period. For another example, the target quantity is a calculation result corresponding to resources allocated, scheduled, indicated, and/or recommended by one or more base stations or all base stations (or optionally a terminal or a device A) to a terminal or a device B in a time period. Specifically, the calculation result may be a proportion or proportion limit of the foregoing resources, or a quantity or quantity limit of the foregoing resources.

Optionally, the target quantity mentioned in the embodiments may further include at least one of an occupancy ratio, an occupancy quantity, a blocking rate, a blocking quantity, an idle rate, an idle quantity, a quantity of transmission successes, a transmission success rate, a quantity of transmission failures, a transmission failure rate, a quantity of discontinuous transmissions (Discontinuous Transmission, DTX), a DTX rate, a quantity of missed detections, a missed detection rate, a quantity of false detections, a false detection rate, a quantity of retransmissions, a retransmission rate, and the like of resources of one or more systems, carriers, bandwidth parts (Band Width Part, BWP), resource pools, users, connections, or groups.

In the embodiments of this application, a ratio between different measurement windows, a ratio between different activity times, a ratio of an activity time to an inactivity time, a ratio of an inactivity time to an activity time, a ratio between a measurement window and an activity time, a ratio between a measurement window and an inactivity time, or the like may not only be a duration ratio, but also be a frequency domain resource ratio, a time-frequency resource ratio, or the like.

The following describes in detail an information determining method provided in the embodiments of this application by using specific embodiments and application scenarios thereof with reference to the accompanying drawings.

FIG. 2 is a flowchart of an information determining method according to an embodiment of the present invention. The method is applied to a terminal. As shown in FIG. 2, the method includes the following steps.

Step 21: Obtain a first resource in a target configuration.

In this embodiment, the target configuration may include an activity time and/or an inactivity time. The first resource may include a measurement window (window) and/or an activity time.

It may be understood that the target configuration may represent a part or all of at least one configuration obtained by the terminal, or a configuration satisfying a condition. This is not limited. For example, if the terminal obtains a configuration 1, a configuration 2, and a configuration 3, the target configuration may include at least one of the configuration 1, the configuration 2, and the configuration 3.

Step 22: Perform a first operation based on the first resource.

Optionally, the first operation may include at least one of the following: performing target monitoring and determining a target quantity. The determining a target quantity may be calculating the target quantity, for example, calculating the target quantity based on a result of target monitoring, or directly determining a result of target monitoring as the target quantity.

It should be noted that the monitoring can be understood as measuring, detecting and/or receiving, or the like, for example, measuring energy or power or strength or a path loss, for example, detecting whether a signal or channel or sequence or resource is occupied or whether a resource is preempted or whether a resource is busy, for example, receiving a channel and/or signal and/or signaling and/or sequence. The terminal may determine the target quantity based on the monitoring result obtained by performing target monitoring. The target quantity may be used for resource selection or resource reselection or resource evaluation or resource re-evaluation, and/or transmission parameter adjustment, or the like.

In an implementation, the target monitoring may be implemented by monitoring a target object. The target object may be as described above, and is not repeated herein.

In this embodiment of this application, the terminal may obtain the first resource in the target configuration, and perform target monitoring and/or determine the target quantity based on the first resource, where the target configuration includes the activity time and/or the inactivity time. Therefore, when target monitoring is performed and/or the target quantity is determined, impact of a power-saving mechanism can be considered. This ensures a reliable measurement result and/or calculation result, enables the terminal to determine an appropriate transmission mechanism and resource selection policy, and ensures normal progress of a transmission process.

Optionally, the measurement window in this solution may be a channel busy rate (Channel Busy Rate, CBR) window, the target monitoring is CBR monitoring, the determined target quantity is a CBR, and the target object for monitoring is a data channel and/or a control channel, such as a PSSCH and/or a resource of the PSSCH.

Optionally, the target quantity calculated in this solution is different from the CBR, and is a new target quantity.

In this embodiment of this application, the target configuration may include a first configuration and/or a second configuration. The first configuration may include an active time and/or an inactive time. The second configuration may include a detection time, a non-detection time, and/or a selection time. The non-detection time does not include a selection time.

Further, the activity time may include an active time, a detection time, and/or a selection time. The inactivity time may include an inactive time and/or a non-detection time.

It should be noted that the detection time may be understood as a detection window, a sensing window, or the like, such as a partial sensing window. The non-detection time may be understood as a time outside the detection window, a time outside the sensing window, or the like.

For example, the first configuration is an SL DRX configuration.

For another example, the second configuration is a partial sensing configuration or a full sensing configuration.

In this way, to save power, after an SL introduces the SL DRX configuration and/or the partial sensing configuration, impact of the SL DRX configuration and/or the partial sensing configuration can be considered when the target quantity such as a CBR is determined. This ensures a reliable CBR, so that the terminal can determine an appropriate transmission mechanism and resource selection policy.

In this embodiment of this application, to satisfy a requirement for performing target monitoring and/or determining the target quantity, different measurement configurations and measurement conditions may be provided, as described below.

1. Optionally, the obtained first resource includes a measurement window, and duration of the measurement window and/or a measurement time point corresponding to the measurement window, such as a slot n, need/needs to satisfy a requirement of a preset value. Further, the requirement of the preset value is specifically: a quantity of resources included in the measurement window is greater than or equal to a first preset value.

Optionally, the resource includes at least one of the following: a measurable resource, a physical resource, and a logical resource.

Optionally, the resource may be a continuous resource or a discontinuous resource.

Optionally, the first preset value may be any one of the following:
(1) 100^{∗}2^{µ∗}J, where µ=0, 1, 2, ..., and J is greater than 0.
   (a) Optionally, J is equal to 1. For example, a quantity of included measurable slots, a quantity of included physical slots, and/or a quantity of included logical slots in the measurement window are/is greater than or equal to 100^{∗}2^{µ}.
   (b) Optionally, J is a numerical value related to the target configuration, or J may be a decimal or a natural number.

For example, assuming that the target configuration is the SL DRX configuration, J is optionally any one of the following:
I. a ratio between an SL DRX active time and a measurement window, for example, a ratio between duration of the SL DRX active time and duration of the measurement window, where
   further, J is a ratio between physical duration corresponding to the SL DRX active time and physical duration corresponding to the measurement window;
II. a ratio between an SL DRX inactive time and an SL DRX active time, for example, a ratio between duration of the SL DRX inactive time and duration of the SL DRX active time; and
III. a ratio between an SL DRX cycle and an SL DRX active time, for example, a ratio between total duration of SL DRX and duration of the SL DRX active time.

(2) A numerical value related to the target configuration.

For example, the first preset value is a quantity of resources within the activity time included in the target configuration multiplied by K, where K is a positive integer or a percentage, or K is a ratio between duration of the inactivity time included in the target configuration and duration of the activity time included in the target configuration.

For another example, assuming that the target configuration is the SL DRX configuration, the first preset value is a quantity of resources within the SL DRX active time multiplied by K, where K is a positive integer or a percentage, or K is the ratio between the SL DRX inactive time and the SL DRX active time, for example, the ratio between duration of the SL DRX inactive time and duration of the SL DRX active time.

Optionally, if the measurement window cannot satisfy a requirement of the first preset value, the terminal may perform the following operations:
I. not performing target monitoring; and/or not determining the target quantity; and
II. not performing a processing operation based on the determined target quantity, for example, not performing resource selection or reselection; for example, still performing target monitoring and determining the target quantity, but not performing the processing operation based on the determined target quantity, for example, not performing resource selection or reselection.

It may be understood that a purpose of the measurement window satisfying the requirement of the first preset value is to ensure that even if measurable resources are discontinuous due to the target configuration such as the SL DRX configuration or the partial sensing configuration, sufficient measurable samples can still be ensured. For example, a sample size approximate to the current CBR measurement, that is, 100·2^{µ} slots, is kept, so that the measurement result keeps compatibility in comparison with the current CBR.

2. Optionally, the obtained first resource includes an activity time, and a quantity of resources included in the activity time is greater than or equal to a second preset value, and/or a quantity of resources included in the inactivity time in the target configuration is less than a third preset value. In this way, sufficient measurement samples can be ensured by virtue of requirements of preset values.

Optionally, the resource includes at least one of the following: a measurable resource, a physical resource, and a logical resource.

Optionally, the resource may be a continuous resource or a discontinuous resource.

For example, assuming that the target configuration is the SL DRX configuration, a quantity of resources included in the obtained active time is greater than or equal to the second preset value, for example, 100^{∗}2^{µ} or 100^{∗}2^{µ∗}J.

Optionally, in a case that a first condition is satisfied, a second operation may be further performed, where the second operation includes at least one of the following:
not performing target monitoring;
not determining the target quantity; and
not performing a processing operation based on the determined target quantity, that is, still performing target monitoring and determining the target quantity, but performing the processing operation based on the determined target quantity, where the processing operation is, for example, adjusting a sending parameter and/or a resource selection policy.

The first condition includes at least one of the following:
the quantity of resources included in the activity time is less than the second preset value; and
the quantity of resources included in the inactivity time is greater than or equal to the third preset value.

Further, the terminal may perform the second operation for at least one of the following:
(1) all configurations obtained by the terminal; for example, all SL DRX configurations and/or all partial sensing configurations obtained by the terminal;
(2) activity times of all configurations obtained by the terminal;
(3) a target configuration to which an activity time not satisfying a requirement of the second preset value belongs;
(4) all activity times of a target configuration to which an activity time not satisfying a requirement of the second preset value belongs;
(5) a resource pool corresponding to an activity time not satisfying a requirement of the second preset value, that is, a resource pool corresponding to a target configuration to which an activity time not satisfying a requirement of the second preset value belongs, where
   for example, if an SL DRX configuration 1 corresponding to a resource pool (pool) 1 does not satisfy a requirement, the second operation is not performed for the resource pool (pool) 1; and
(6) an activity time not satisfying a requirement of the second preset value, that is, for other configurations or activity times satisfying the requirement, target monitoring can still be performed, and/or the target quantity can still be determined.

It may be understood that a purpose of the activity time and/or the inactivity time satisfying the requirement of the preset value is to ensure that even if measurable resources are discontinuous due to the target configuration such as the SL DRX configuration or the partial sensing configuration, sufficient measurable samples can still be ensured. For example, a sample size approximate to the current CBR measurement, that is, 100^{∗}2^{µ} slots, is kept, so that the measurement result keeps compatibility in comparison with the current CBR.

Some illustrations in the foregoing embodiment are described by using the SL DRX configuration as an example, but this embodiment is not limited to this. The foregoing method is also applicable to the partial sensing configuration, for example, replacing the active time with the detection time and/or the selection time, and replacing the inactive time with the non-detection time.

3. Optionally, the obtained first resource includes a measurement window and/or an activity time. For example, the first resource includes one or more measurement windows, and/or the first resource includes one or more activity times.

Further, the first resource needs to satisfy at least one of the following:
(1) a quantity of resources within the activity time in Z1 measurement windows is greater than or equal to a first preset threshold;
   for example, a quantity of subchannels within an active time in one measurement window is not less than 5, that is, greater than or equal to 5;
   for example, a quantity of slots within an active time in one measurement window is not less than 50, that is, greater than or equal to 50;
(2) a proportion of resources within the activity time in Z2 measurement windows is greater than or equal to a second preset threshold;
(3) a quantity of resources within the inactivity time in Z3 measurement windows is less than or equal to a third preset threshold;
   for example, a quantity of subchannels within an inactive time in one measurement window is not greater than 5, that is, less than or equal to 5;
   for example, a quantity of slots within an inactive time in one measurement window is not greater than 50, that is, less than or equal to 50;
(4) a proportion of resources within the inactivity time in Z4 measurement windows is less than or equal to a fourth preset threshold;
(5) a quantity of resources included in Z5 measurement windows is greater than or equal to a fifth preset threshold;
(6) a ratio of a quantity of resources included in Z6 measurement windows is greater than or equal to a sixth preset threshold;
(7) a quantity of resources included in Z7 activity times is greater than or equal to a seventh preset threshold; and
(8) a ratio of a quantity of resources included in Z8 activity times is greater than or equal to an eighth preset threshold.

It should be noted that Z1, Z2, Z3, Z4, Z5, Z6, Z7, and Z8 are positive integers. Preferably, Z1, Z2, Z3, Z4, Z5, Z6, Z7, and Z8 are all equal to 1.

The first preset threshold, the second preset threshold, the third preset threshold, the fourth preset threshold, the fifth preset threshold, the sixth preset threshold, the seventh preset threshold, and the eighth preset threshold may be preset based on an actual requirement and are not limited.

It may be understood that a purpose of ensuring the quantity or proportion of resources in the measurement window and/or within the activity time is to ensure sufficient measurable samples.

Optionally, when the measurement window and/or the activity time do/does not satisfy at least one of the foregoing (1) to (8), the terminal does not need to perform target monitoring in the measurement window and/or within the activity time, that is, does not participate in target monitoring, and/or does not need to determine the target quantity; or the terminal still performs target monitoring and determines the target quantity in the measurement window and/or within the activity time, but does not perform the processing operation based on the determined target quantity, such as adjusting the sending parameter and/or the resource selection policy.

Optionally, if a resource selection mode of the terminal is a random selection mode, the terminal does not need to perform target monitoring, that is, does not participate in target monitoring, and/or does not need to determine the target quantity.

It should be noted that the foregoing measurement configuration and/or measurement condition may be used alone or in combination with the following definition of the measurement window. This is not limited.

In this embodiment of this application, to satisfy diversified requirements, the measurement window may have different definitions, which are separately described as follows:

### <Definition 1>

In the definition 1, at least a part of resources of one or more activity times constitute the measurement window. In this case, the concept of the measurement window may be defined separately, or the concept of the measurement window may not be defined separately but is directly replaced with an activity time.

In other words, in this case, it can be considered that the measurement window is determined by at least a part of resources within one or more activity times; or it can be considered that the measurement window includes at least a part of resources within one or more activity times. The terminal performs target monitoring and/or determines the target quantity only based on the resources within the activity time, and excludes impact of the inactivity time before monitoring and/or calculation.

Optionally, in the definition 1, the obtained first resource includes a measurement window, and the measurement window includes at least one activity time. Correspondingly, the process of performing the first operation may include: the terminal performs the first operation based on resources of the at least one activity time.

Optionally, that the measurement window includes at least one activity time may be that the measurement window is all resources of one or more activity times or that the measurement window at least includes all resources of one or more activity times; or may be that the measurement window is a part of resources of one or more activity times or that the measurement window includes at least a part of resources of one or more activity times.

Preferably, the measurement window is first q resources of one or more activity times, or the measurement window at least includes first q resources of one or more activity times, where q is a positive integer and may be preset based on an actual requirement.

For example, if a time point for triggering target monitoring or target quantity determining is the slot n, the measurement window is [n-a1, n-a2], where a1 and/or a2 may be obtained by using the method described above. Further, assuming that the target configuration is the SL DRX configuration, the measurement window includes at least a part of resources of one or more active times before or in the slot n, or the measurement window includes at least a part of resources of one or more active times.

Optionally, a quantity of resources within the at least one activity time is greater than or equal to a first threshold. That a quantity of resources within a plurality of activity times is greater than or equal to the first threshold may be understood as: a total quantity of resources within the plurality of activity times is greater than or equal to the first threshold, or a quantity of resources within each activity time is greater than or equal to the first threshold. The first threshold may be set based on an actual requirement.

For example, assuming that the target configuration is the SL DRX configuration, a total quantity of logical slots within one or more active times corresponding to the measurement window is greater than or equal to 100, or a total quantity of logical slots within one or more active times corresponding to the measurement window is greater than or equal to 100^{∗}2^{µ}.

Optionally, in the definition 1, the obtaining a first resource in a target configuration may include: obtaining, by the terminal, first indication information, where the first indication information is used to determine a measurement window that requires target monitoring and/or that is used to determine the target quantity. The first indication information may indicate at least one of the following: the measurement window that requires target monitoring and/or that is used to determine the target quantity, an activity time that requires target monitoring and/or that is used to determine the target quantity, a measurement window that does not require target monitoring and/or that is not used to determine the target quantity, an activity time that does not require target monitoring and/or that is not used to determine the target quantity, and the like. It may be understood that, when the first indication information indicates the activity time that does not require target monitoring and/or that is not used to determine the target quantity, the first indication information may indicate that a remaining part of the activity time requires target monitoring and/or is used to determine the target quantity.

Further, the first indication information may be used to indicate at least one of the following:
(1) An activity time corresponding to the measurement window.

In (1), the first indication information may indicate an activity time corresponding to one measurement window.

For example, the first indication information is a bitmap (bitmap), and each bit (bit) corresponds to one or more activity times, slots, symbols (symbols), mini-slots, ms, frames, COTs, and/or periodicities. An activity time, a slot, a symbol, a mini-slot, an ms, a frame, a COT, and/or a periodicity corresponding to a bit that is set to a preset value such as 1 requires target monitoring and/or is used to determine the target quantity.

(2) A quantity of activity times corresponding to the measurement window.

In (2), the first indication information may indicate a quantity of activity times corresponding to one measurement window.

For example, if the first indication information indicates M, where M is a positive integer, it indicates that one measurement window includes M activity times, where target monitoring is performed within the M activity times and/or the M activity times are used to determine the target quantity.

(3) A preset activity time corresponding to the measurement window.

For example, the preset activity time may include but is not limited to a first activity time and a last activity time.

(4) A start point of an activity time corresponding to the measurement window.

(5) An end point of an activity time corresponding to the measurement window.

(6) A quantity of measurement windows. For example, if one measurement window corresponds to one activity time, when the first indication information indicates N, where N is a positive integer, it indicates that there are N measurement windows and N activity times, that is, it indicates that target monitoring is performed based on the N activity times and/or that the N activity times are used to determine the target quantity.

(7) The measurement window.

It should be noted that the measurement window in (7) can be understood as a position of the measurement window.

For example, the first indication information is a bitmap, each bit corresponds to one or more measurement windows, one measurement window corresponds to one activity time, and target monitoring needs to be performed in a measurement window corresponding to a bit that is set to a preset value such as 1 and/or the measurement window is used to determine the target quantity.

Alternatively, the measurement window in (7) can be understood as a preset measurement window, for example, a first activity time corresponding to the measurement window, and/or a last activity time corresponding to the measurement window.

Optionally, in a case that the first indication information is determined by the terminal, a manner of determining the indication information by the terminal itself is: a corresponding activity time is a possible latest activity time that satisfies a requirement of a preset value. In other words, in this case, an activity time determined based on the first indication information is a latest activity time that satisfies a requirement of a second preset value. For example, a quantity of resources within the latest activity time is greater than or equal to the second preset value. The second preset value may be preset based on an actual requirement.

Optionally, in the definition 1, the measurement window may be related to a resource pool. The measurement window may include resources belonging to a first resource pool and/or a preset resource pool. The first resource pool may be understood as any resource pool.

For example, the measurement window includes resources belonging to any resource pool. For another example, the measurement window includes only resources belonging to the preset resource pool.

Further, in a case that the obtained measurement window includes at least one activity time, the terminal may perform the first operation based on a resource that is within the at least one activity time and that belongs to the preset resource pool; and/or perform the first operation based on a resource that is within the at least one activity time and that belongs to the first resource pool.

For example, if the measurement window includes a resource belonging to any resource pool, the terminal may perform target monitoring and/or is used to determine the target quantity based on the resource that is in the measurement window and that belongs to any resource pool.

For another example, if the measurement window includes a resource belonging to the preset resource pool, the terminal may perform target monitoring and/or determine the target quantity based on a resource that is in the measurement window and that belongs to any resource pool, or may perform target monitoring and/or is used to determine the target quantity based on the resource that is in the measurement window and that belongs to the preset resource pool.

Optionally, the preset resource pool is a resource pool in which a first object that triggers target quantity determining and/or triggers target monitoring is located. The first object may include at least one of the following: a service, a data packet, a media access control protocol data unit (Media Access Control Protocol Data Unit, MAC PDU), data, and a transport block (Transport Block, TB).

Optionally, to ensure a reliable calculation result of the target quantity, the calculation result in the measurement window may be adjusted by using a scale (scale) factor, so that a calculation result of a final target quantity is obtained. The performing the first operation based on a resource within the at least one activity time may include:
determining, by the terminal, a first target quantity based on the resource within the at least one activity time; and
adjusting, by the terminal, the first target quantity by using a first scale factor, to obtain the final target quantity.

Optionally, when determining the first target quantity, the terminal may calculate the first target quantity based on a comparison between a target monitoring result and a threshold, or may directly deduce the first target quantity based on a target monitoring result.

In an implementation, the first target quantity may be multiplied by the first scale factor to obtain the final target quantity.

Optionally, the first scale factor α may be either of the following:
(1) A ratio between a fourth preset value and a quantity of resources within the at least one activity time.

Optionally, the fourth preset value may be preset based on an actual requirement. The resource within the at least one activity time may be all or a part of the resources. Optionally, the resource is but not limited to a physical slot, a logical slot, a subchannel (subchannel), or the like.

For example, assuming that the measurement window corresponds to one activity time, where the activity time includes 80 slots, and the fourth preset value is 100 slots, α is equal to 1.25.

(2) A ratio between a total quantity of resources in a reference window and a quantity of resources within the at least one activity time.

It should be noted that, in an implementation, the total quantity of resources refers to the total quantity of resources in the reference window without considering any configuration such as the DRX configuration or the partial sensing configuration. Optionally, the total quantity of resources may be a total quantity of physical resources. The reference window may be a current CBR window or the measurement window itself. The resource within the at least one activity time may be all or a part of the resources.

It may be understood that, by virtue of the definition 1, the measurement window is defined as a combination of one or more activity times, so that an unmeasurable resource within the inactivity time does not interfere with the target monitoring result.

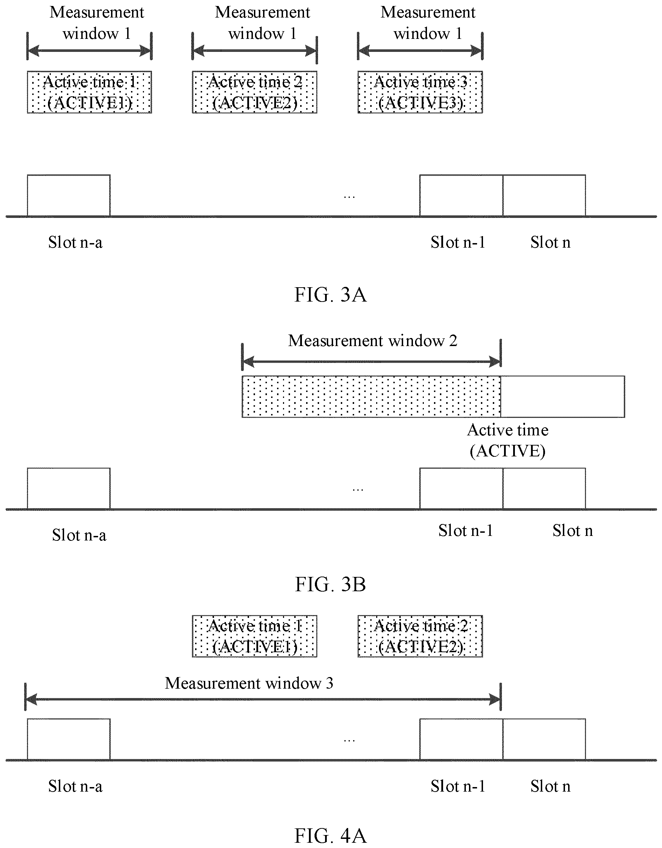

For example, referring to FIG. 3A, the slot n is a time point for triggering target monitoring or target quantity determining, and three active times Active 1, Active2, and Active3 before the slot n correspond to a measurement window 1, that is, the measurement window 1 includes Active 1, Active2, and Active3. In this case, target monitoring and/or target quantity determining may be performed based on the three active times in the measurement window 1.

For another example, referring to FIG. 3B, a measurement window 2 includes a part of resources within an active time. In this case, target monitoring and/or target quantity determining may be performed based on the active time in the measurement window 1.

### <Definition 2>

In the definition 2, the measurement window and the activity time are defined separately. In this case, target monitoring and/or target quantity determining are/is performed only based on at least a part of resources in an overlapping part between the measurement window and one or more activity times, without considering the inactivity time.

Optionally, in the definition 2, the obtained first resource includes a measurement window. Correspondingly, the process of performing the first operation may include: performing, by the terminal, the first operation based on a resource that is in the measurement window and that overlaps the activity time; and performing, by the terminal, the first operation based on a remaining resource after the inactivity time is excluded from the measurement window. It should be noted that the overlapping resource may be all or a part of the resources in the overlapping part between the measurement window and the activity time.

For example, if a time point for triggering target monitoring or target quantity determining is the slot n, the measurement window is [n-a1, n-a2], where a1 and/or a2 may be obtained by using the method described above.

Optionally, the measurement window is within the activity time. To be specific, when the measurement window is defined based on a base station configuration, a preconfiguration, a protocol agreement, a related terminal, or the like, it needs to be ensured that the measurement window needs to be within one or more activity times, that is, the terminal does not expect the measurement window to contain an inactive time in a related configuration, such as the SL DRX configuration.

For example, using the SL DRX configuration as an example, the time point slot n at which the terminal determines to perform target monitoring or determine the target quantity needs to ensure that the measurement window corresponding to the slot n must be within an active time in one SL DRX.

It should be noted that the position of the measurement window within the activity time refers to a position in time domain, and there may be the following two cases: (1) A measurable resource, a physical resource, and/or a logical resource of the measurement window are/is within the activity time, but a part other than these resources may not be in the window. (2) The measurement window is completely within the activity time, that is, all time domain resources are within the activity time. For example, assuming that the measurement window is defined based on a physical time, for example, corresponding to 10 ms, where the second ms, the third ms, and the fourth ms belong to a logical time, for example, used for the SL; and the activity time corresponds to the second ms, the third ms, and the fourth ms of the physical time based on the logical time, for example, used for the SL. In this case, from a perspective of the physical time, the measurement window is not completely within the activity time, but a part that is in the measurement window and that belongs to the logical time or the SL is actually included in the activity time.

Optionally, the measurement window includes the inactivity time. In this case, the determining the target quantity only based on the overlapping part between the measurement window and one or more activity times may also be understood as determining the target quantity based on the remaining resource after the inactivity time is excluded from the measurement window.

Optionally, a quantity of resources that are in the measurement window and that overlap the activity time is greater than or equal to a ninth preset threshold. The ninth preset threshold may be preset based on an actual requirement.

Optionally, the ninth preset threshold may be set to a value in a same manner as the first preset value, and may be either of the following:
100^{∗}2^{µ∗}J, where µ is an integer greater than or equal to 0, and J is greater than 0; and
a numerical value related to the target configuration.

Further, the overlapping resource is not later than a first time point, for example, the overlapping resource precedes the first time point, and the overlapping resource is a resource closest to the first time point, within the activity time included in the target configuration. The first time point is a time point related to triggering of target quantity determining, or a time point related to triggering of target monitoring.

For example, a quantity of overlapping resources greater than or equal to the ninth preset threshold are not earlier than the time point slot n for triggering of target quantity determining and/or triggering of target monitoring and are resources closest to the slot n.

Optionally, the measurement window may be determined by the terminal itself. For example, the terminal itself may determine that a start time of the measurement window is a latest possible start time satisfying a requirement of a preset value; and/or the terminal itself may determine that an end time of the measurement window is a latest possible end time satisfying a requirement of a preset value. For example, for the measurement window [n-a1, n-a2], the terminal itself may determine a1 as a value corresponding to the latest possible start point satisfying the requirement of the preset value; and/or the terminal itself may determine a2 as a value corresponding to the latest possible end point satisfying the requirement of the preset value.

Optionally, in the definition 2, the obtaining a first resource in a target configuration may include: obtaining, by the terminal, second indication information, where the second indication information is used to determine a measurement window that requires target monitoring and/or that is used to determine the target quantity. The second indication information may indicate at least one of the following: the measurement window that requires target monitoring and/or that is used to determine the target quantity, an activity time that requires target monitoring and/or that is used to determine the target quantity, a measurement window that does not require target monitoring and/or that is not used to determine the target quantity, an activity time that does not require target monitoring and/or that is not used to determine the target quantity, and the like. It may be understood that, when the second indication information indicates the activity time that does not require target monitoring and/or that is not used to determine the target quantity, the second indication information may indicate that a remaining part of the activity time requires target monitoring and/or is used to determine the target quantity.

Further, the second indication information may be used to indicate at least one of the following:
(1) An activity time included in the measurement window.

In (1), the second indication information may indicate an activity time corresponding to one measurement window.

For example, the second indication information is a bitmap, and each bit corresponds to one or more activity times, slots, symbols, mini-slots, ms, frames, COTs, or periodicities. An overlapping part between the measurement window and an activity time, a slot, a symbol, a mini-slot, an ms, a frame, or a periodicity corresponding to a bit that is set to a preset value such as 1 requires target monitoring and/or is used to determine the target quantity.

(2) A quantity of activity times included in the measurement window.

In (2), the second indication information may indicate a quantity of activity times included in one measurement window.

For example, if the second indication information indicates M, where M is a positive integer, it indicates that one measurement window includes M activity times, where target monitoring is performed on an overlapping part between the measurement window and the M activity times and/or the overlapping part is used to determine the target quantity.

(3) An activity time that requires target monitoring and/or that is used to determine the target quantity, where the activity time corresponds to the measurement window.

For example, the second indication information is a bitmap, and each bit corresponds to one or more activity times, slots, symbols, mini-slots, ms, frames, COTs, or periodicities. An overlapping part between the measurement window and an activity time, a slot, a symbol, a mini-slot, an ms, a frame, or a periodicity corresponding to a bit that is set to a preset value such as 1 requires target monitoring and/or is used to determine the target quantity.

(4) A quantity of activity times that require target monitoring and/or that are used to determine the target quantity, where the activity times correspond to the measurement window.

For example, if the second indication information indicates N, where N is a positive integer, an overlapping part between the measurement window and the N activity times requires target monitoring and/or is used to determine the target quantity.

(5) A preset activity time that requires target monitoring and/or that is used to determine the target quantity, where the preset activity time corresponds to the measurement window. For example, the preset activity time is a first activity time and/or a last activity time.

(6) A start point of an activity time that requires target monitoring and/or that is used to determine the target quantity, where the activity time corresponds to the measurement window.

(7) An end point of an activity time that requires target monitoring and/or that is used to determine the target quantity, where the activity time corresponds to the measurement window.

Optionally, in the definition 2, the measurement window may be related to a resource pool. The measurement window may include resources belonging to a first resource pool and/or a preset resource pool. The first resource pool may be understood as any resource pool.

For example, the measurement window includes resources belonging to any resource pool. For another example, the measurement window includes only resources belonging to the preset resource pool.

Further, the process of performing the first operation may include: performing, by the terminal, the first operation based on a resource that is in the measurement window and that overlaps the activity time and belongs to the first resource pool; and/or performing, by the terminal, the first operation based on a resource that is in the measurement window and that overlaps the activity time and belongs to the preset resource pool.

For example, if the measurement window includes a resource belonging to any resource pool, the terminal may perform target monitoring and/or determine the target quantity based on the resource that is in the measurement window and that belongs to any resource pool.

For another example, if the measurement window includes a resource belonging to the preset resource pool, the terminal may perform target monitoring and/or determine the target quantity based on a resource that is in the measurement window and that belongs to any resource pool, or may perform target monitoring and/or is used to determine the target quantity based on the resource that is in the measurement window and that belongs to the preset resource pool.

Optionally, the preset resource pool is a resource pool in which a first object that triggers target quantity determining and/or triggers target monitoring is located. The first object may include at least one of the following: a service, a data packet, a MAC PDU, data, and a transport block.

Optionally, to ensure a reliable calculation result of the target quantity, the calculation result in the measurement window may be adjusted by using a scale (scale) factor, so that a calculation result of a final target quantity is obtained. The performing the first operation based on a resource that is in the measurement window and that overlaps the activity time may include:
determining, by the terminal, a second target quantity based on the resource that is in the measurement window and that overlaps the activity time; and
adjusting, by the terminal, the second target quantity by using a second scale factor, to obtain the final target quantity.

In an implementation, the second target quantity may be multiplied by the second scale factor to obtain the final target quantity.

Optionally, the second scale factor β may be a ratio between a fifth preset value and a quantity of resources within an activity time corresponding to the measurement window.

Optionally, the fifth preset value may be preset based on an actual requirement. The resource within the activity time corresponding to the measurement window is, for example, a measurable resource, a physical resource, or a logical resource. The logical resource is, for example, a logical slot, a logical symbol, or a logical mini-slot.

For example, assuming that the measurement window overlaps one activity time, and that an overlapping part includes 80 slots, and that the fifth preset value is 100 slots, β=1.25.

It may be understood that, by virtue of the definition 2, impact of an unmeasurable part on the measurement result can be excluded.

For example, referring to FIG. 4A, the slot n is related to a time point for triggering of target monitoring and/or target quantity determining. A measurement window 3 overlaps two active times: Active1 and Active2. In this case, target monitoring and/or target quantity determining may be performed only based on an overlapping part between the measurement window 3 and the two active times.

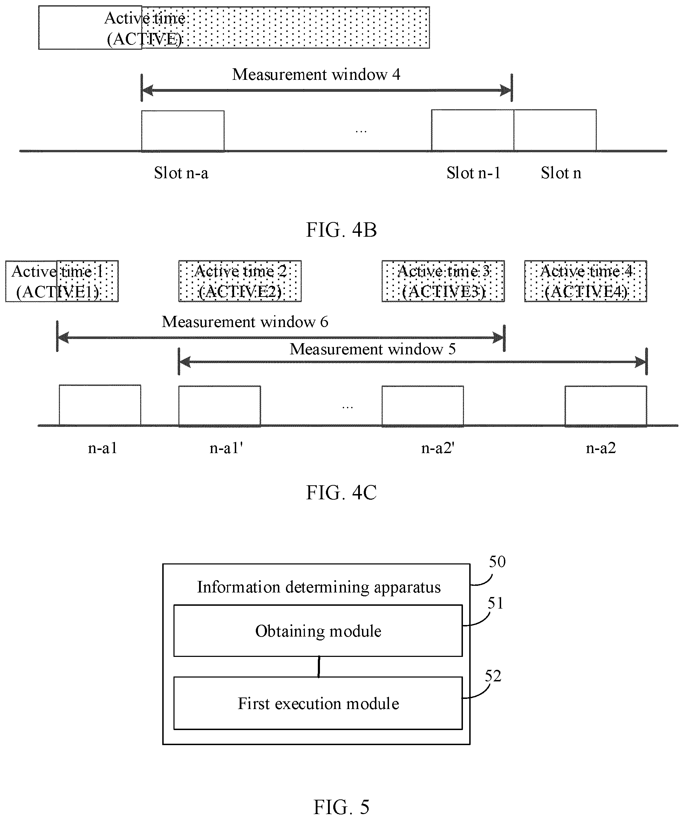

For another example, referring to FIG. 4B, the slot n is related to a time point for triggering of target monitoring and/or target quantity determining. A measurement window 4 overlaps a part of an active time Active3. In this case, target monitoring and/or target quantity determining may be performed only based on an overlapping part between the measurement window 4 and the active time.

For another example, referring to FIG. 4C, the slot n is related to a time point for triggering of target monitoring and/or target quantity determining. A measurement window 5 overlaps active times 2, 3, and 4, and a quantity of SL slots in an overlapping part is 100. A measurement window 6 overlaps active times 1, 2, and 3, and a quantity of SL slots in an overlapping part is 100. When determining a final measurement window, the terminal may select the measurement window 5 closest to the slot n, that is, the measurement window [n-a1, n-a2] in FIG. 4C.

### <Definition 3>

In the definition 3, the measurement window and the activity time are defined separately, and the measurement window does not exclude the inactive time.

For example, the measurement window is [n-a, n-1] and uses the same definition as the current CBR window, where a is obtained by using a higher-layer parameter timeWindowSize-CBR, and n is related, for example, to a time point for triggering of target monitoring and/or target quantity determining.

Optionally, a is 100 or 100^{∗}2^{µ} slots. Optionally, a is configured by using a higher-layer parameter.

In this way, by virtue of the definition 3, the calculated target quantity can be directly or indirectly compared with a target quantity calculated in the prior art, and has better compatibility.

### <Definition 4>

In the definition 4, the measurement window and the activity time are defined separately, and the measurement window does not exclude the inactive time.

Optionally, in the definition 4, if the measurement window overlaps the activity time, it needs to be ensured that the measurement window is related to a time point related to triggering of target quantity determining, and/or that the measurement window is related to a time point related to triggering of target monitoring.

Further, in the definition 4, when the obtained first resource includes a measurement window, the measurement window may satisfy at least one of the following:
starting earlier by a first preset time than the activity time included in the target configuration; and
ending later by a second preset time than the activity time included in the target configuration.

The first preset time and the first preset time can be set based on an actual requirement.

For example, assuming that the target configuration is the SL DRX configuration, the measurement window may start earlier by K time domain resources than the DRX active time, and/or end later by L time domain resources than the DRX active time.

Optionally, the K time domain resources and L time domain resources are all logical time domain resources.

Optionally, the K time domain resources and L time domain resources are all logical time domain resources in a preset resource pool.

Optionally, the time domain resources are slots.

In this way, by virtue of the definition 4, the terminal can learn, through measurement included in the inactivity time, a working status of another system not aligned with DRX of the terminal, to better adjust a transmission policy.

In this embodiment of this application, the obtained first resource includes a measurement window; and correspondingly the process of performing the first operation based on the first resource may include:
performing, by the terminal, target monitoring based on a resource in the measurement window, to obtain a first monitoring result; and
calculating, by the terminal, a ratio between a quantity of resources whose first monitoring results are higher or lower than a tenth preset threshold and a first quantity, to obtain the target quantity; or
calculating, by the terminal, a ratio between a quantity of resources satisfying a first relationship with the first monitoring results and a first quantity, to obtain the target quantity, where the first relationship may be understood as a resource whose first monitoring result is within a threshold range, and/or the first monitoring result itself, for example, may be a resource on which a preset signal or channel or signaling or sequence has been sent and/or received.

Optionally, the first quantity may be any one of the following:
a quantity of resources in the measurement window;
a quantity of resources that are in the measurement window and within the activity time;
a quantity of resources in a first measurement window, where optionally, the first measurement window may be a window defined differently from the foregoing measurement window, for example, the foregoing measurement window uses the definition 1 or 2, and the first measurement window uses the definition 3 or 4; and
a quantity of resources that are in a first measurement window and within the activity time, where optionally, the first measurement window may be a window defined differently from the foregoing measurement window, for example, the foregoing measurement window uses the definition 1 or 2, and the first measurement window uses the definition 3 or 4.

Optionally, the tenth preset threshold may be any one of the following: a received signal strength indicator (Received Signal Strength Indication, RSSI) threshold, a reference signal received power (Reference Signal Received Power, RSRP) threshold, a reference signal received quality (Reference Signal Received Quality, RSRQ) threshold, a signal to interference plus noise ratio (Signal to Interference plus Noise Ratio, SINR) threshold, a signal-to-noise ratio (Signal-to-Noise Ratio, SNR) threshold, and the like.

Further, the performing target monitoring based on a resource in the measurement window may be specifically: calculating, by the terminal, the first monitoring result based on a resource that is in the measurement window and within the activity time.

In other words, determining the target quantity in this embodiment may be understood as: dividing a first value by a second value, or dividing a second value by a first value.

The first value is a quantity of resources whose monitoring results are higher or lower than a threshold in a measurement window corresponding to the first value, and the threshold may be any one of the following: an RSSI threshold, an RSRP threshold, an RSRQ threshold, an SINR threshold, and an SNR threshold. Further optionally, the first value is a quantity of resources that are in the measurement window corresponding to the first value and within the activity time, and whose monitoring results are higher or lower than the threshold.

The second value is a total quantity of resources in a measurement window corresponding to the second value. Further optionally, the second value is a quantity of resources that are in the measurement window corresponding to the second value and within the active time.

Optionally, the measurement window corresponding to the first value and the measurement window corresponding to the second value may be the same. In this case, lengths of the measurement windows corresponding to the first value and the second value are the same.

For example, the measurement windows both use the definition 1, definition 2, definition 3, or definition 4, that is, the first value and the second value are obtained in a same component window.

Optionally, the measurement window corresponding to the first value and the measurement window corresponding to the second value may be different. For example, the measurement window corresponding to the first value uses the definition 1 or definition 2, and the measurement window corresponding to the second value uses the definition 3 or definition 4. In this way, the length of the measurement window corresponding to the second value can be set to be the same as that in an existing solution, to facilitate comparison.

Optionally, the length of the measurement window corresponding to the first value is less than or equal to, that is, not greater than, the length of the measurement window corresponding to the second value.

In summary, calculation of the target quantity includes at least the following cases:
(1) The measurement windows corresponding to the first value and the second value are different. The measurement window corresponding to the first value excludes resources of the inactivity time, and the measurement window corresponding to the second value may or may not exclude the resources of the inactivity time.

An advantage of the case (1) is that impact of unmeasurable resources on the calculation result is excluded.

(2) The measurement windows corresponding to the first value and the second value are the same. The measurement windows corresponding to the first value and the second value both exclude the resources of the inactivity time.

An advantage of the case (2) is that impact of unmeasurable resources on the calculation result is excluded.

(3) The measurement windows corresponding to the first value and the second value are the same. When the first value is collected through statistics, the resources of the inactivity time are excluded.

An advantage of the case (3) is that impact of unmeasurable resources on the calculation result is excluded, and that the calculation result can be directly or indirectly compared with a calculation result in the prior art.

(4) The measurement windows corresponding to the first value and the second value are the same. When the first value and the second value are collected through statistics, the first value and the second value both exclude the resources of the inactivity time.

An advantage of the case (4) is that impact of unmeasurable resources on the calculation result is excluded.

(5) The measurement windows corresponding to the first value and the second value are the same. When the first value and the second value are collected through statistics, neither the first value nor the second value excludes the resources of the inactivity time.

In this way, by calculating the target quantity, the terminal can know utilization of resources within a period of time. This helps the terminal select subsequent resources and transmission policies.

It should be noted that if a measurement window corresponding to a numerator and/or a denominator includes the inactivity time when the target quantity is determined, the calculation of the target quantity needs to be adjusted based on the inactivity time, to ensure that a reliable calculation result is obtained.

Optionally, in a case that the measurement window includes the inactivity time, the process of calculating the ratio between the quantity of resources whose first monitoring results are higher or lower than the tenth preset threshold and the first quantity may include:
calculating, by the terminal, a ratio between a quantity of resources whose first monitoring results are higher or lower than an adjusted tenth preset threshold and the first quantity, to obtain the final target quantity, where the adjusted tenth preset threshold is obtained by adjusting the tenth preset threshold by using a first adjustment value.

Optionally, the tenth preset threshold is a threshold obtained by the terminal for determining the target quantity.

Alternatively, the tenth preset threshold is a threshold obtained by the terminal for determining the target quantity when the target configuration is not activated or enabled, and the adjusted tenth preset threshold is a threshold for determining the target quantity after the target configuration is activated or enabled.

Optionally, the first adjustment value is related to a first ratio; and the first ratio is a ratio between the activity time included in the target configuration and the inactivity time included in the target configuration. Further, the first ratio is a ratio between duration of the activity time included in the target configuration and duration of the inactivity time included in the target configuration. The duration may be understood as a quantity of included resources, a quantity of included measurable resources, and/or a quantity of included logical resources, or the like.

It should be noted that when there are preset thresholds corresponding to the activity time and the inactivity time, there may be no concept of the first adjustment value for determining the target quantity, that is, there is no corresponding adjustment process.

Optionally, in a case that the measurement window includes the inactivity time, the process of calculating the ratio between the quantity of resources whose first monitoring results are higher or lower than the tenth preset threshold and the first quantity may include:
performing, by the terminal, target monitoring based on a resource that is in the measurement window and within the activity time, to obtain a second monitoring result; and performing target monitoring based on a resource that is in the measurement window and within the inactivity time, to obtain a third monitoring result;
determining, by the terminal, a second ratio based on the second monitoring result; and determining a third ratio based on the third monitoring result, where for example, the terminal may calculate a ratio between a quantity of resources whose second monitoring results are higher or lower than an eleventh preset threshold or a quantity of resources satisfying a relationship with the second monitoring results such as being within a threshold range and a quantity of resources in the measurement window, to obtain the second ratio; and/or the terminal may calculate a ratio between a quantity of resources whose third monitoring results are higher or lower than a twelfth preset threshold or a quantity of resources satisfying a relationship with the third monitoring results such as being within a threshold range and a quantity of resources in the measurement window, to obtain the third ratio; and
obtaining, by the terminal, the target quantity based on the second ratio and the third ratio, where for example, the terminal may calculate the second ratio and the third ratio in a manner of summation, maximization, minimization, averaging, or weighted summation to obtain the final target quantity.

The eleventh preset threshold and the twelfth preset threshold may be set based on an actual requirement, and may be the same or different.

Further, the process of obtaining the target quantity based on the second ratio and the third ratio may include:
adjusting, by the terminal, the second ratio by using a second adjustment value, and/or adjusting the third ratio by using a third adjustment value; and
obtaining, by the terminal, the target quantity based on any one of the following:
   an adjusted second ratio and the third ratio;
   the second ratio and an adjusted third ratio; and
   an adjusted second ratio and an adjusted third ratio.

Optionally, the second adjustment value and the third adjustment value may be set based on actual requirements. The second adjustment value and the third adjustment value may be the same or different. A sum of the second adjustment value and the third adjustment value may be equal to 1.

For example, using the SL DRX configuration as an example, if the measurement window overlaps the DRX inactive time, at least one of the following is included when the target quantity is determined:
(a) A DRX inactive time part is included in target quantity determining, and a threshold actually required for determining the target quantity is equal to an obtained threshold minus delta1 or is equal to an obtained threshold multiplied by γ1.
   Optionally, delta1 is related to a ratio between duration corresponding to the SL DRX inactive time and duration corresponding to the SL DRX active time, and/or γ1 is related to a ratio between duration corresponding to the SL DRX inactive time and duration corresponding to the SL DRX active time.
(b) A DRX inactive time part is included in target quantity determining, and a threshold required for determining the target quantity when the SL DRX configuration is enabled is equal to a threshold required for determining the target quantity when the SL DRX configuration is not enabled minus delta2 or is equal to an obtained threshold multiplied by θ1.

Alternatively, a DRX inactive time part is included in target quantity determining, and a threshold required for determining the target quantity during sleep is equal to a threshold required for determining the target quantity during wakeup minus delta2 or is equal to an obtained threshold multiplied by θ1. Sleep may be understood as not enabling, and wakeup may be understood as enabling.

Optionally, delta2 is related to a ratio between duration corresponding to the SL DRX inactive time and duration corresponding to the SL DRX active time, and/or θ1 is related to a ratio between duration corresponding to the SL DRX inactive time and duration corresponding to the SL DRX active time.

(c) Optionally, there are preset thresholds corresponding to the active time and the inactive time. The terminal obtains the preset thresholds corresponding to the active time and the inactive time by using at least one of methods such as configuration through a base station, preconfiguration, scheduling or indication by a scheduling terminal, inter-user negotiation, protocol specification, and terminal self-determining. In this case, there is no need to adjust obtaining. For example, when the DRX inactive time part is included in target quantity determining, there are thresholds corresponding to the active time and the inactive time.

For example, when the target quantity is determined, measurement results within the active time are compared with a threshold 1, and measurement results within the inactive time are compared with a threshold 2. For example, the threshold 2 may be lower than the threshold 1.

(d) The DRX inactive time part is included in target quantity determining, and the target quantity is equal to a sum of a target quantity 1 multiplied by γ2 and a target quantity 2 multiplied by θ2. The target quantity 1 is equal to a proportion of resources whose measurement results exceed a threshold 3 within the active time of the measurement window to the resources in the measurement window, and the target quantity 2 is equal to a proportion of resources whose measurement results exceed a threshold 4 within the inactive time of the measurement window to the resources in the measurement window.

Optionally, a sum of γ2 and θ2 is 1. The threshold 3 and the threshold 4 may be the same or different.

(e) Optionally, there are measurement windows corresponding to the active time and the inactive time. Optionally, at least a part of the measurement window corresponding to the active time and the measurement window corresponding to the inactive time is not passed. The terminal obtains measurement windows corresponding to the active time and the inactive time by using at least one of methods such as configuration through a base station, preconfiguration, scheduling or indication by a scheduling terminal, inter-user negotiation, protocol specification, and terminal self-determining. For example, when the DRX inactive time part is included in target quantity determining, there are measurement windows corresponding to the active time and the inactive time.

For example, when the target quantity is determined, a target quantity 3 of an active time part is calculated in a measurement window 1 corresponding to the active time, and a target quantity 4 of an inactive time part is calculated in a measurement window 2 corresponding to the inactive time. Weighted summation may be performed on the two calculation results or the two calculation results may be respectively used to determine resource selection and/or transmission parameters of the active and inactive parts, for example, corresponding to different channel occupancy ratio (Channel occupancy Ratio, CR) limits and/or transmission parameter configurations. A transmission parameter configuration may include at least one of an available MCS, a transmit power limit, a bit rate limit, a transmission data volume limit, a geographic location limit, a resource allocation limit, a transmission limit, and the like, for example, at least one of a maximum MCS, a minimum MCS, maximum transmit power, minimum transmit power, a maximum bit rate, a minimum bit rate, a maximum TB size, a minimum TB size, a maximum distance, a minimum distance, a geographic location number, a maximum quantity of frequency domain resources, a minimum quantity of frequency domain resources, a maximum quantity of subchannels, a minimum quantity of subchannels, a maximum quantity of retransmissions, a minimum quantity of retransmissions, a maximum quantity of transmissions, a minimum quantity of transmissions, a maximum quantity of resource reservations, a minimum quantity of resource reservations, a maximum quantity of reserved resources, and a minimum quantity of reserved resources.

In this way, impact of the inactive time on the measurement result can be adjusted by adjusting a threshold or a coefficient, or different evaluation criteria can be used for the inactive time and the active time.

In this embodiment of this application, optionally, there are preset thresholds corresponding to the activity time and the inactivity time for determining target quantities. The terminal obtains the preset thresholds corresponding to the activity time and the inactivity time by using at least one of methods such as configuration through a base station, preconfiguration, scheduling or indication by a scheduling terminal, inter-user negotiation, protocol specification, and terminal self-determining.

Optionally, there may be measurement windows corresponding to the activity time and the inactivity time. Optionally, at least a part of the measurement window corresponding to the activity time and the measurement window corresponding to the inactivity time is not passed. The terminal obtains the measurement windows corresponding to the activity time and the inactivity time by using at least one of methods such as configuration through a base station, preconfiguration, scheduling or indication by a scheduling terminal, inter-user negotiation, protocol specification, and terminal self-determining.

In this embodiment of this application, in a case that the terminal obtains a plurality of sets of first configurations and/or second configurations, the terminal may obtain a first resource satisfying constraints of the plurality of sets of first configurations and/or second configurations; and/or the terminal may determine one target quantity for the plurality of sets of first configurations and/or second configurations based on the obtained first resource.

Optionally, in a case that the terminal obtains a plurality of sets of first configurations and/or second configurations, the target configuration may be a configuration that satisfies a preset condition in the plurality of sets of first configurations and/or second configurations.

Optionally, the preset condition includes: the target configuration is a configuration corresponding to a resource pool in which a first object that triggers target quantity determining is located, or the target configuration is a configuration corresponding to a resource pool in which a first object that triggers target monitoring is located.

Optionally, the target configuration may be related to a feature of a first object that triggers target quantity determining or triggers target monitoring.

Optionally, the first object may include at least one of the following: a service, a data packet, a MAC PDU, data, and a transport block.

Optionally, in a case that the terminal obtains a plurality of sets of first configurations and/or second configurations, the terminal may obtain a first resource in each set of first configurations or each set of second configurations separately; and/or the terminal may perform the first operation for each set of first configurations or each set of second configurations separately based on the obtained first resource.

For example, using the SL DRX configuration as an example, if the terminal obtains a plurality of sets of SL DRX configurations corresponding to a same system, carrier, bandwidth part (Band Width Part, BWP), or resource pool:
(1) Define measurement windows in a unified manner and/or calculate one target quantity.

Optionally, if the terminal obtains a plurality of sets of SL DRX configurations or a plurality of SL DRX configurations corresponding to a preset resource pool by using at least one of methods such as configuration through a base station, preconfiguration, scheduling or indication by a scheduling terminal, inter-user negotiation, protocol specification, and terminal self-determining, the target quantity is determined based on the plurality of sets of SL DRX configurations.

Optionally, no matter which definition is used for the measurement window, the plurality of sets of SL DRX configurations need to be considered, that is, the target quantity is determined on resources that satisfy the constraints of all the SL DRX configurations.

For example, the target quantity is determined based on resources that are in the measurement window and that overlap the active times of all the SL DRX configurations.

Optionally, the terminal determines the target quantity on a resource that satisfies at least one of constraints such as a longest active time or inactive time, a shortest active time or inactive time, unicast SL DRX, broadcast SL DRX, groupcast SL DRX, a largest DRX ID, a smallest DRX ID, a DRX ID being a preset ID, a largest ID of a corresponding resource pool of DRX, a smallest ID of a Corresponding resource pool of DRX, and an ID of a Corresponding resource pool of DRX being a preset ID.

(2) Define a measurement window and/or determine a target quantity for each SL DRX configuration separately.

(3) The definition of the measurement window and/or the calculation of the target quantity are/is affected only by an SL DRX configuration corresponding to a resource pool in which a service, a data packet, a MAC PDU, data, and/or a TB, or the like that triggers target quantity determining is located. In other words, a measurement window is defined and/or a target quantity is determined for a DRX pattern (pattern) corresponding to a same resource pool.

To be specific, if there are a plurality of DRX configurations, target measurement and/or target quantity determining may be performed for all the DRX configurations, or target measurement and/or target quantity determining may be performed separately for different DRX configurations. The latter is applicable to a case that a plurality of DRX patterns are used for different transmissions. For example, it can prevent a unicast DRX configuration from being relatively idle but causes occupancy of plenty of resources in a broadcast DRX configuration.

It may be understood that, the foregoing is an example of obtaining a plurality of sets of SL DRX configurations, but this embodiment of this application is not limited to this. Alternatively, a plurality of sets of partial sensing configurations may be obtained, or a plurality of sets of SL DRX configurations and partial sensing configurations may be obtained. The corresponding process of monitoring and/or calculation is similar to the foregoing content. Details are not described herein again.

The partial sensing configuration may include one or more partial sensing windows. In comparison with the SL DRX configuration, the partial sensing window is similar to an active time. The outside of the partial sensing window is similar to an inactive time.

Optionally, the target configuration includes a partial sensing configuration, where the partial sensing configuration is related to a first object that triggers target monitoring and/or target quantity determining. The first object may include at least one of the following: a service, a data packet, a MAC PDU, data, and a transport block.

Further, the partial sensing configuration is related to a feature of the first object that triggers target monitoring and/or target quantity determining. The feature may include at least one of the following: a periodicity, a packet delay budget (Packet Delay Budget, PDB), a maximum quantity of transmissions, a reliability requirement, quality of service (Quality of Service, QoS), a priority, and the like.

For example, if the periodicity or PDB of the service that triggers target monitoring or target quantity determining is 100 ms, the partial sensing configuration considered in target quantity determining is the partial sensing configuration corresponding to the service or the periodicity or PDB. Specifically, the periodicity of the partial sensing configuration and/or a step of the partial sensing configuration may correspond to the service, or the periodicity of the partial sensing configuration and/or a step of the partial sensing configuration may correspond to the periodicity or PDB.

Optionally, if the terminal obtains a plurality of sets of partial sensing configurations:
(a) Define measurement windows in a unified manner and/or calculate one target quantity.

Optionally, the target quantity is determined on resources that are in the measurement window and that satisfy all partial sensing configurations. For example, the target quantity is determined based on resources that are in the measurement window and that overlap partial sensing windows of all the partial sensing configurations.

Optionally, the target quantity is determined on a resource that satisfies one of the following constraints: duration of a partial sensing window, a total length of all partial sensing windows in a partial sensing configuration, or a longest time span of a partial sensing window in a partial sensing configuration, duration of a partial sensing window, a total length of all partial sensing windows in a partial sensing configuration, or a shortest time span of a partial sensing window in a partial sensing configuration, a largest or smallest ID or a preset ID of a partial sensing configuration, a largest or smallest ID or a preset ID of a resource pool corresponding to a partial sensing configuration, unicast partial sensing, broadcast partial sensing, and group partial sensing.

(b) Define a measurement window and/or determine a target quantity for each partial sensing configuration separately.

(c) The definition of the measurement window and/or the calculation of the target quantity are/is affected only by a partial sensing configuration corresponding to a resource pool in which a service, a data packet, a MAC PDU, data, and/or a TB, or the like that triggers target quantity determining is located. In other words, a measurement window is defined and/or a target quantity is determined for a partial sensing configuration corresponding to a same resource pool.

In this embodiment of this application, if both the first configuration and the second configuration exist, the terminal may determine that simultaneous enabling of the first configuration and the second configuration is not allowed; or the terminal determines that the first resource for determining the target quantity and/or performing target monitoring satisfies a constraint of the first configuration and/or the second configuration.

Further, when determining that the first resource for determining the target quantity and/or performing target monitoring satisfies the constraint of the first configuration and/or the second configuration, the terminal may obtain constraint indication information, and determine, based on the constraint indication information, that the first resource for determining the target quantity and/or performing target monitoring satisfies the constraint of the first configuration and/or the second configuration.

For example, using the SL DRX configuration and the partial sensing configuration as examples, if both the SL DRX configuration and the partial sensing configuration exist, it can be ensured in a manner such as configuration through a base station, preconfiguration, protocol agreement, or scheduling or indication by a scheduling terminal, that simultaneous enabling of the SL DRX configuration and the partial sensing configuration is not performed, and the terminal does not perform SL DRX and partial sensing simultaneously.

Alternatively, if both the SL DRX configuration and the partial sensing configuration are allowed to exist, at least one of the corresponding constraints of the SL DRX configuration and the partial sensing configuration is satisfied:
(1) Optionally, the corresponding constraint of the SL DRX configuration is satisfied, or the corresponding constraint of the partial sensing configuration is satisfied, as long as the resource is in the partial sensing window or within the SL DRX active time.
(2) Optionally, the corresponding constraints of the SL DRX configuration and the partial sensing configuration are both satisfied, that is, the resource needs to be in the partial sensing window and within the SL DRX active time.
(3) Optionally, the terminal may obtain constraint indication information by using (configuration through a base station, scheduling or indication by a scheduling terminal, preconfiguration, inter-terminal negotiation, protocol specification, terminal self-determining, or the like), and the constraint indication information is used to determine that the constraint of the partial sensing configuration, the constraint of the SL DRX configuration, or the constraints of the partial sensing configuration and the SL DRX configuration need to be satisfied. For example, the constraint indication information may indicate a configuration that needs to be satisfied, and/or indicate a configuration that does not need to be satisfied.

Optionally, after performing the first operation, the terminal may send the determined target quantity, and/or send a monitoring result obtained after target monitoring is performed. For example, the terminal may send the foregoing information to a base station and/or another terminal, to facilitate learning and reception by the base station and/or the another terminal.

Optionally, in a case that the terminal has a plurality of transmission modes, the terminal may separately determine the target quantity and/or perform target monitoring for at least one of the plurality of transmission modes based on the obtained first resource.

For example, if there are a plurality of transmission modes (cast type), such as at least a part of broadcast, groupcast, and unicast, the terminal may calculate one target quantity for a first transmission mode in the plurality of transmission modes, such as a CBR and/or a CR, and calculate one target quantity for a second transmission mode. The first transmission mode is different from the second transmission mode. Specifically, for example, for broadcast transmission, target detection is performed and/or the target quantity 1 is determined; and for unicast, target detection is performed and/or the target quantity 2 is determined.

It should be noted that although the partial sensing configuration is used as an example for description in this application, this application is not limited to the partial sensing configuration, and a full sensing configuration is also applicable.

Each of the foregoing embodiments may exist independently, or may be implemented in combination.

For the activity time or measurement window in each of the foregoing embodiments, if the time point that triggers target monitoring and/or target quantity determining and a time part after the time point are included, these parts of resources possibly cannot be monitored, for example, measured, and only the part before the time point can be monitored.

It should be noted that the information determining method provided in this embodiment of this application may be performed by an information determining apparatus or a control module for performing the information determining method in the information determining apparatus. An information determining apparatus provided in an embodiment of this application is described by assuming that the information determining method in this embodiment of this application is performed by the information determining apparatus.

Referring to FIG. 5, an embodiment of this application provides an information determining apparatus, applied to a terminal. Referring to FIG. 5, the information determining apparatus 50 includes:
an obtaining module 51, configured to obtain a first resource in a target configuration; and
a first execution module 52, configured to perform a first operation based on the first resource, where
the first operation includes at least one of the following: performing target monitoring and determining a target quantity; and
the target configuration includes an activity time and/or an inactivity time.

Optionally, the target configuration includes a first configuration and/or a second configuration; the first configuration includes an active time and/or an inactive time, and the second configuration includes a detection time and/or a non-detection time; and the activity time includes an active time and/or a detection time; and the inactivity time includes an inactive time and/or a non-detection time.

Optionally, the first resource includes a measurement window, and a quantity of resources included in the measurement window is greater than or equal to a first preset value.

Optionally, the resource includes at least one of the following: a measurable resource, a physical resource, and a logical resource.

Optionally, the first preset value is either of the following:
100^{∗}2^{µ∗}J, where µ is an integer greater than or equal to 0, and J is greater than 0; and
a numerical value related to the target configuration.

Optionally, the first resource includes an activity time, and a quantity of resources included in the activity time is greater than or equal to a second preset value, and/or a quantity of resources included in the inactivity time is less than a third preset value.

Optionally, in a case that the quantity of resources included in the activity time is less than the second preset value, and/or that the quantity of resources included in the inactivity time is greater than or equal to the third preset value, the information determining apparatus 50 further includes:
a second execution module, configured to perform a second operation, where
the second operation includes at least one of the following:
   not performing target monitoring;
   not determining the target quantity; and
   not performing a processing operation based on the determined target quantity.

Optionally, the second execution module is specifically configured to perform the second operation for at least one of the following:
all configurations obtained by the terminal;
activity times of all configurations obtained by the terminal;
a target configuration to which an activity time not satisfying a requirement of the second preset value belongs;
all activity times of a target configuration to which an activity time not satisfying a requirement of the second preset value belongs;
a resource pool corresponding to an activity time not satisfying a requirement of the second preset value, for example, a resource pool corresponding to a configuration to which an activity time not satisfying a requirement of the second preset value belongs; and
an activity time not satisfying a requirement of the second preset value.

Optionally, the first resource includes a measurement window and/or an activity time; and the first resource satisfies at least one of the following:
a quantity of resources within the activity time in Z 1 measurement windows is greater than or equal to a first preset threshold;
a proportion of resources within the activity time in Z2 measurement windows is greater than or equal to a second preset threshold;
a quantity of resources within the inactivity time in Z3 measurement windows is less than or equal to a third preset threshold;
a proportion of resources within the inactivity time in Z4 measurement windows is less than or equal to a fourth preset threshold;
a quantity of resources included in Z5 measurement windows is greater than or equal to a fifth preset threshold;
a ratio of a quantity of resources included in Z6 measurement windows is greater than or equal to a sixth preset threshold;
a quantity of resources included in Z7 activity times is greater than or equal to a seventh preset threshold; and
a ratio of a quantity of resources included in Z8 activity times is greater than or equal to an eighth preset threshold, where
Z1, Z2, Z3, Z4, Z5, Z6, Z7, and Z8 are positive integers.

Optionally, the first resource includes a measurement window, and the measurement window includes at least one activity time; and the first execution module 52 is specifically configured to perform the first operation based on a resource within the at least one activity time.

Optionally, the obtaining module 51 is specifically configured to obtain first indication information, where
the first indication information is used to determine a measurement window that requires target monitoring and/or that is used to determine the target quantity.

Optionally, the first indication information is used to indicate at least one of the following:
an activity time corresponding to the measurement window;
a quantity of activity times corresponding to the measurement window;
a preset activity time corresponding to the measurement window;
a start point of an activity time corresponding to the measurement window;
an end point of an activity time corresponding to the measurement window;
a quantity of measurement windows; and
the measurement window.

Optionally, in a case that the first indication information is determined by the terminal, an activity time determined based on the first indication information is a latest activity time that satisfies a requirement of a second preset value.

Optionally, the measurement window includes resources belonging to a first resource pool and/or a preset resource pool.

Optionally, the first execution module 52 is specifically configured to perform either of the following:
performing the first operation based on a resource that is within the at least one activity time and that belongs to the preset resource pool; and
performing the first operation based on a resource that is within the at least one activity time and that belongs to the first resource pool.

Optionally, the first execution module 52 includes:
a first calculation unit, configured to determine a first target quantity based on the resource within the at least one activity time; and
a first adjustment unit, configured to adjust the first target quantity by using a first scale factor, to obtain the target quantity.

Optionally, the first scale factor is either of the following:
a ratio between a fourth preset value and a quantity of resources within the at least one activity time; and
a ratio between a total quantity of resources in a reference window and a quantity of resources within the at least one activity time.

Optionally, the first resource includes a measurement window; and the first execution module 52 is specifically configured to:
perform the first operation based on a resource that is in the measurement window and that overlaps the activity time; or perform the first operation based on a remaining resource after the inactivity time is excluded from the measurement window.

Optionally, the measurement window is within the activity time; or
the measurement window includes the inactivity time.

Optionally, a quantity of overlapping resources is greater than or equal to a ninth preset threshold.

Optionally, the overlapping resource is not earlier than a first time point, and the overlapping resource is a resource closest to the first time point, within the activity time included in the target configuration, where
the first time point is a time point related to triggering of target quantity determining, or the first time point is a time point related to triggering of target monitoring.

Optionally, the obtaining module 51 is specifically configured to obtain second indication information, where
the second indication information is used to determine a measurement window that requires target monitoring and/or that is used to determine the target quantity.

Optionally, the second indication information is used to indicate at least one of the following:
an activity time included in the measurement window;
a quantity of activity times included in the measurement window;
an activity time that requires target monitoring and/or that is used to determine the target quantity, where the activity time corresponds to the measurement window;
a quantity of activity times that require target monitoring and/or that are used to determine the target quantity, where the activity times correspond to the measurement window;
a preset activity time that requires target monitoring and/or that is used to determine the target quantity, where the preset activity time corresponds to the measurement window;
a start point of an activity time that requires target monitoring and/or that is used to determine the target quantity, where the activity time corresponds to the measurement window; and
an end point of an activity time that requires target monitoring and/or that is used to determine the target quantity, where the activity time corresponds to the measurement window.

Optionally, the measurement window includes resources belonging to a first resource pool and/or a preset resource pool.

Optionally, the first execution module 52 is specifically configured to perform either of the following:
performing the first operation based on a resource that is in the measurement window and that overlaps the activity time and belongs to the first resource pool; and
performing the first operation based on a resource that is in the measurement window and that overlaps the activity time and belongs to the preset resource pool.

Optionally, the first execution module 52 includes:
a second calculation unit, configured to determine a second target quantity based on a resource that is in the measurement window and that overlaps the activity time; and
a second adjustment unit, configured to adjust the second target quantity by using a second scale factor, to obtain the target quantity.

Optionally, the second scale factor is a ratio between a fifth preset value and a quantity of resources within an activity time corresponding to the measurement window.

Optionally, the first resource includes a measurement window; and the measurement window is related to a time point related to triggering of target quantity determining, or the measurement window is related to a time point related to triggering of target monitoring; and
the measurement window satisfies at least one of the following:
starting earlier by a first preset time than the activity time included in the target configuration; and
ending later by a second preset time than the activity time included in the target configuration.

Optionally, the first resource includes a measurement window; and the first execution module 52 includes:
a first monitoring unit, configured to perform target monitoring based on a resource in the measurement window, to obtain a first monitoring result; and
a third calculation unit, configured to calculate a ratio between a quantity of resources whose first monitoring results are higher or lower than a tenth preset threshold and a first quantity, to obtain the target quantity; or calculate a ratio between a quantity of resources satisfying a first relationship with the first monitoring results and a first quantity, to obtain the target quantity, where
the first quantity is any one of the following:
   a quantity of resources in the measurement window;
      a quantity of resources that are in the measurement window and within the activity time;
   a quantity of resources in a first measurement window; and
      a quantity of resources that are in a first measurement window and within the activity time.

Optionally, the first monitoring unit is specifically configured to calculate the first monitoring result based on a resource that is in the measurement window and within the activity time.

Optionally, in a case that the measurement window includes the inactivity time, the third calculation unit is specifically configured to calculate a ratio between a quantity of resources whose first monitoring results are higher or lower than an adjusted tenth preset threshold and the first quantity, to obtain the target quantity, where
the adjusted tenth preset threshold is obtained by adjusting the tenth preset threshold by using a first adjustment value.

Optionally, the tenth preset threshold is a threshold obtained by the terminal for determining the target quantity;
or
the tenth preset threshold is a threshold obtained by the terminal for determining the target quantity when the target configuration is not activated or enabled, and the adjusted tenth preset threshold is a threshold for determining the target quantity after the target configuration is activated or enabled.

Optionally, the first adjustment value is related to a first ratio; and the first ratio is a ratio between the activity time included in the target configuration and the inactivity time included in the target configuration.

Optionally, the first execution module 52 includes:
a first monitoring unit, configured to perform target monitoring based on a resource that is in the measurement window and within the activity time, to obtain a second monitoring result; and perform target monitoring based on a resource that is in the measurement window and within the inactivity time, to obtain a third monitoring result;
a fourth calculation unit, configured to determine a second ratio based on the second monitoring result, and determine a third ratio based on the third monitoring result; and
a fifth calculation unit, configured to obtain the target quantity based on the second ratio and the third ratio.

Optionally, the fifth calculation unit includes:
an adjustment unit, configured to adjust the second ratio by using a second adjustment value, and/or adjust the third ratio by using a third adjustment value; and
a calculation subunit, configured to obtain the target quantity based on any one of the following:
   an adjusted second ratio and the third ratio;
      the second ratio and an adjusted third ratio; and
   an adjusted second ratio and an adjusted third ratio.

Optionally, in a case that the terminal obtains a plurality of sets of first configurations and/or second configurations, the obtaining module 51 is specifically configured to obtain a first resource satisfying constraints of the plurality of sets of first configurations and/or second configurations.

Optionally, in a case that the terminal obtains a plurality of sets of first configurations and/or second configurations, the first execution module 52 is specifically configured to calculate one target quantity for the plurality of sets of first configurations and/or second configurations based on the first resource.

Optionally, in a case that the terminal obtains a plurality of sets of first configurations and/or second configurations, the target configuration is a configuration that satisfies a preset condition in the plurality of sets of first configurations and/or second configurations.

Optionally, the preset condition includes:
the target configuration is a configuration corresponding to a resource pool in which a first object that triggers target quantity determining is located, or the target configuration is a configuration corresponding to a resource pool in which a first object that triggers target monitoring is located.

Optionally, the target configuration may be related to a feature of a first object that triggers target quantity determining or triggers target monitoring.

Optionally, the first information includes at least one of the following:
a service, a data packet, a MAC PDU, data, and a transport block.

Optionally, in a case that the terminal obtains a plurality of sets of first configurations and/or second configurations, the obtaining module 51 is specifically configured to obtain a first resource in each set of first configurations or each set of second configurations separately.

Optionally, in a case that the terminal obtains a plurality of sets of first configurations and/or second configurations, the first execution module 52 is specifically configured to perform the first operation for each set of first configurations or each set of second configurations separately.

Optionally, the information determining apparatus 50 further includes:
a determining module, configured to perform either of the following:
determining that simultaneous enabling of the first configuration and the second configuration is not allowed; and
determining that the first resource for determining the target quantity and/or performing target monitoring satisfies a constraint of the first configuration and/or the second configuration.

Optionally, the determining module is further configured to: obtain constraint indication information; and determine, based on the constraint indication information, that the first resource for determining the target quantity and/or performing target monitoring satisfies the constraint of the first configuration and/or the second configuration.

Optionally, the information determining apparatus 50 further includes:
a sending module, configured to send the determined target quantity, and/or send a monitoring result obtained after target monitoring is performed.

Optionally, the target quantity includes at least one of the following: a CBR and a CR.

Optionally, in a case that the terminal has a plurality of transmission modes, the performing a first operation based on the first resource includes:
a calculation module, configured to separately determine the target quantity and/or perform target monitoring for at least one of the plurality of transmission modes based on the first resource.

The information determining apparatus in this embodiment of this application may be an apparatus, or may be a component, an integrated circuit, or a chip in a terminal. The apparatus may be a mobile terminal, or may be a non-mobile terminal. For example, the mobile terminal may include but is not limited to the foregoing illustrated type of the terminal 11. The non-mobile terminal may be a server, a network attached storage (Network Attached Storage, NAS), a personal computer (personal computer, PC), a television (television, TV), a teller machine, a self-service machine, or the like. This is not specifically limited in this embodiment of this application.

The information determining apparatus in this embodiment of this application may be an apparatus having an operating system. The operating system may be an Android (Android) operating system, an iOS operating system, or other possible operating systems, and is not specifically limited in this embodiment of this application.

The information determining apparatus 50 provided in this embodiment of this application can implement each process implemented by the method embodiment in FIG. 2, with the same technical effect achieved. To avoid repetition, details are not described herein again.

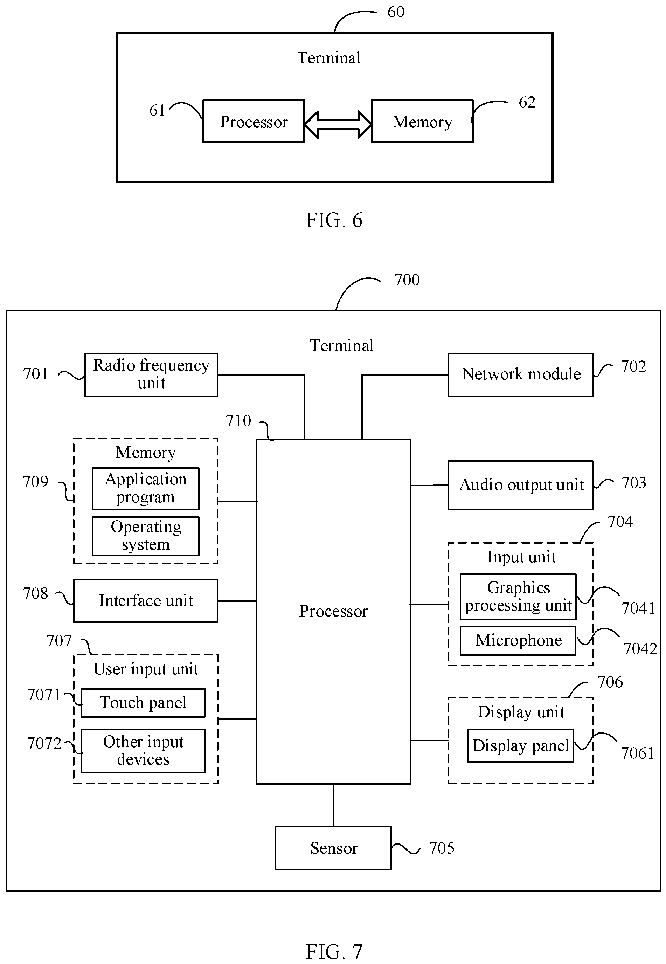

Optionally, as shown in FIG. 6, an embodiment of this application further provides a terminal 60, including a processor 61, a memory 62, and a program or instructions stored in the memory 62 and capable of running on the processor 61. When the program or instructions are executed by the processor 61, each process of the foregoing information determining method embodiment is implemented, with the same technical effect achieved. To avoid repetition, details are not described herein again.

FIG. 7 is a schematic diagram of a hardware structure of a terminal for implementing an embodiment of this application.

The terminal 700 includes but is not limited to components such as a radio frequency unit 701, a network module 702, an audio output unit 703, an input unit 704, a sensor 705, a display unit 706, a user input unit 707, an interface unit 708, a memory 709, and a processor 710.

A person skilled in the art may understand that the terminal 700 may further include a power supply (for example, a battery) supplying power to all components. The power supply may be logically connected to the processor 710 through a power management system. In this way, functions such as charge management, discharge management, and power consumption management are implemented by using the power management system. The terminal structure shown in FIG. 7 does not constitute a limitation on the terminal. The terminal may include more or fewer components than those shown in the figure, or some components are combined, or component arrangements are different. Details are not described herein again.

It should be understood that, in this embodiment of this application, the input unit 704 may include a graphics processing unit (Graphics Processing Unit, GPU) 7041 and a microphone 7042. The graphics processing unit 7041 processes image data of a still picture or video obtained by an image capture apparatus (such as a camera) in a video capture mode or an image capture mode. The display unit 706 may include a display panel 7061, and the display panel 7061 may be configured in a form of a liquid crystal display, an organic light-emitting diode, or the like. The user input unit 707 includes a touch panel 7071 and other input devices 7072. The touch panel 7071 is also referred to as a touchscreen. The touch panel 7071 may include two parts: a touch detection apparatus and a touch controller. The other input devices 7072 may include but are not limited to a physical keyboard, a function key (such as a volume control key or a switch key), a trackball, a mouse, and a joystick. Details are not described herein again.

In this embodiment of this application, after receiving downlink data from a network-side device, the radio frequency unit 701 sends the downlink data to the processor 710 for processing, and in addition, sends uplink data to the network-side device. Generally, the radio frequency unit 701 includes but is not limited to an antenna, at least one amplifier, a transceiver, a coupler, a low noise amplifier, a duplexer, and the like.

The memory 709 may be configured to store software programs or instructions and various data. The memory 709 may primarily include a program or instruction storage area and a data storage area. The program or instruction storage area may store an operating system, an application program or instructions (such as an audio play function and an image play function) required by at least one function, and the like. In addition, the memory 709 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or another non-volatile solid-state storage device.

The processor 710 may include one or more processing units. Optionally, the processor 710 may integrate an application processor and a modem processor. The application processor mainly processes the operating system, a user interface, an application program, or an instruction. The modem processor mainly processes wireless communication. For example, the modem processor is a baseband processor. It may be understood that the modem processor may alternatively not be integrated in the processor 710.

The processor 710 is configured to: obtain a first resource in a target configuration; and perform a first operation based on the first resource, where the first operation includes at least one of the following: performing target monitoring and determining a target quantity; and the target configuration includes an activity time and/or an inactivity time.

The terminal 700 provided in this embodiment of this application can implement each process implemented by the method embodiment in FIG. 2, with the same technical effect achieved. To avoid repetition, details are not described herein again.

An embodiment of this application further provides a readable storage medium. The readable storage medium stores a program or instructions. When the program or instructions are executed by a processor, each process of the foregoing method embodiment shown in FIG. 2 is implemented, with the same technical effect achieved. To avoid repetition, details are not described herein again.

The processor is a processor in the terminal in the foregoing embodiment. The readable storage medium includes a computer-readable storage medium, for example, a computer read-only memory (Read-Only Memory, ROM), a random access memory (Random Access Memory, RAM), a magnetic disk, or an optical disc.

In addition, an embodiment of this application provides a chip. The chip includes a processor and a communications interface. The communications interface is coupled to the processor. The processor is configured to run a program or instructions on a network-side device to implement each process of the foregoing method embodiment shown in FIG. 2, with the same technical effect achieved. To avoid repetition, details are not described herein again.

It should be understood that the chip provided in this embodiment of this application may also be referred to as a system-level chip, a system chip, a chip system, a system-on-chip, or the like.

It may be understood that the embodiments described in the present disclosure may be implemented by hardware, software, firmware, middleware, microcode, or a combination thereof. For hardware implementation, a module, unit, submodule, subunit, or the like may be implemented in one or more application specific integrated circuits (Application Specific Integrated Circuits, ASIC), digital signal processors (Digital Signal Processing, DSP), digital signal processing devices (DSP Device, DSPD), programmable logic devices (Programmable Logic Device, PLD), field-programmable gate arrays (Field-Programmable Gate Array, FPGA), general-purpose processors, controllers, microcontrollers, microprocessors, and other electronic units for performing the functions described in this application, or a combination thereof.

It should be noted that in this specification, the term "comprise", "include", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a ..." does not preclude existence of other identical elements in the process, method, article, or apparatus that includes the element. In addition, it should be noted that the scope of the method and apparatus in the implementations of this application is not limited to performing the functions in an order shown or discussed, and may further include performing the functions in a substantially simultaneous manner or in a reverse order depending on the functions used. For example, the method described may be performed in an order different from that described, and various steps may be added, omitted, or combined. In addition, features described with reference to some examples may be combined in other examples.

According to the foregoing description of the implementations, a person skilled in the art may clearly understand that the methods in the foregoing embodiments may be implemented by using software in combination with a necessary general hardware platform, and certainly may alternatively be implemented by using hardware. However, in most cases, the former is a preferred implementation. Based on such an understanding, the technical solutions of this application essentially or the part contributing to the prior art may be implemented in a form of a software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The embodiments of this application are described above with reference to the accompanying drawings. However, this application is not limited to the foregoing specific embodiments. The foregoing specific embodiments are merely illustrative rather than restrictive. Inspired by this application, a person of ordinary skill in the art can still derive a plurality of variations without departing from the essence of this application and the protection scope of the claims. All these variations shall fall within the protection scope of this application.

## Claims

1. An information determining method, comprising:
obtaining, by a terminal, a first resource in a target configuration; and
performing, by the terminal, a first operation based on the first resource, wherein
the first operation comprises at least one of the following: performing target monitoring and determining a target quantity; and
the target configuration comprises an activity time and/or an inactivity time.

2. The method according to claim 1, wherein the target configuration comprises a first configuration and/or a second configuration; the first configuration comprises an active time and/or an inactive time, and the second configuration comprises a detection time and/or a non-detection time; and
the activity time comprises an active time and/or a detection time; and the inactivity time comprises an inactive time and/or a non-detection time.

3. The method according to claim 1, wherein the first resource comprises a measurement window, and a quantity of resources comprised in the measurement window is greater than or equal to a first preset value.

4. The method according to claim 3, wherein the resource comprises at least one of the following: a measurable resource, a physical resource, and a logical resource.

5. The method according to claim 3, wherein the first preset value is either of the following:
100^{∗}2^{µ∗}J, wherein µ is an integer greater than or equal to 0, and J is greater than 0; and
a numerical value related to the target configuration.

6. The method according to claim 1, wherein the first resource comprises an activity time, and a quantity of resources comprised in the activity time is greater than or equal to a second preset value, and/or a quantity of resources comprised in the inactivity time is less than a third preset value.

7. The method according to claim 6, further comprising:
in a case that a first condition is satisfied, performing, by the terminal, a second operation, wherein
the second operation comprises at least one of the following:
not performing target monitoring;
not determining the target quantity; and
not performing a processing operation based on the determined target quantity, wherein
the first condition comprises at least one of the following:
the quantity of resources comprised in the activity time is less than the second preset value; and
the quantity of resources comprised in the inactivity time is greater than or equal to the third preset value.

8. The method according to claim 7, wherein the performing a second operation comprises:
performing, by the terminal, the second operation for at least one of the following:
all configurations obtained by the terminal;
activity times of all configurations obtained by the terminal;
a target configuration to which an activity time not satisfying a requirement of the second preset value belongs;
all activity times of a target configuration to which an activity time not satisfying a requirement of the second preset value belongs;
a resource pool corresponding to an activity time not satisfying a requirement of the second preset value; and
an activity time not satisfying a requirement of the second preset value.

9. The method according to claim 1, wherein the first resource comprises a measurement window and/or an activity time; and
the first resource satisfies at least one of the following:
a quantity of resources within the activity time in Z 1 measurement windows is greater than or equal to a first preset threshold;
a proportion of resources within the activity time in Z2 measurement windows is greater than or equal to a second preset threshold;
a quantity of resources within the inactivity time in Z3 measurement windows is less than or equal to a third preset threshold;
a proportion of resources within the inactivity time in Z4 measurement windows is less than or equal to a fourth preset threshold;
a quantity of resources comprised in Z5 measurement windows is greater than or equal to a fifth preset threshold;
a ratio of a quantity of resources comprised in Z6 measurement windows is greater than or equal to a sixth preset threshold;
a quantity of resources comprised in Z7 activity times is greater than or equal to a seventh preset threshold; and
a ratio of a quantity of resources comprised in Z8 activity times is greater than or equal to an eighth preset threshold, wherein
Z1, Z2, Z3, Z4, Z5, Z6, Z7, and Z8 are positive integers.

10. The method according to claim 1, wherein the first resource comprises a measurement window, and the measurement window comprises at least one activity time; and
the performing a first operation based on the first resource comprises:
performing, by the terminal, the first operation based on a resource within the at least one activity time.

11. The method according to claim 10, wherein
the obtaining a first resource in a target configuration comprises:
obtaining, by the terminal, first indication information, wherein
the first indication information is used to determine a measurement window that requires target monitoring and/or that is used to determine the target quantity.

12. The method according to claim 11, wherein the first indication information is used to indicate at least one of the following:
an activity time corresponding to the measurement window;
a quantity of activity times corresponding to the measurement window;
a preset activity time corresponding to the measurement window;
a start point of an activity time corresponding to the measurement window;
an end point of an activity time corresponding to the measurement window;
a quantity of measurement windows; and
the measurement window.

13. The method according to claim 11, wherein in a case that the first indication information is determined by the terminal, an activity time determined based on the first indication information is a latest activity time that satisfies a requirement of a second preset value.

14. The method according to claim 10, wherein the measurement window comprises resources belonging to a first resource pool and/or a preset resource pool.

15. The method according to claim 14, wherein the performing the first operation based on a resource within the at least one activity time comprises either of the following:
performing, by the terminal, the first operation based on a resource that is within the at least one activity time and that belongs to the preset resource pool; and
performing, by the terminal, the first operation based on a resource that is within the at least one activity time and that belongs to the first resource pool.

16. The method according to claim 10, wherein the performing the first operation based on a resource within the at least one activity time comprises:
determining, by the terminal, a first target quantity based on the resource within the at least one activity time; and
adjusting, by the terminal, the first target quantity by using a first scale factor, to obtain the target quantity.

17. The method according to claim 16, wherein the first scale factor is either of the following:
a ratio between a fourth preset value and a quantity of resources within the at least one activity time; and
a ratio between a total quantity of resources in a reference window and a quantity of resources within the at least one activity time.

18. The method according to claim 1, wherein the first resource comprises a measurement window; and
the performing a first operation based on the first resource comprises one of the following:
performing, by the terminal, the first operation based on a resource that is in the measurement window and that overlaps the activity time; and
performing, by the terminal, the first operation based on a remaining resource after the inactivity time is excluded from the measurement window.

19. The method according to claim 18, wherein the measurement window is within the activity time; or
the measurement window comprises the inactivity time.

20. The method according to claim 18, wherein a quantity of overlapping resources is greater than or equal to a ninth preset threshold; and
the ninth preset threshold is either of the following:
100^{∗}2^{µ∗}J, wherein µ is an integer greater than or equal to 0, and J is greater than 0; and
a numerical value related to the target configuration.

21. The method according to claim 18, wherein the overlapping resource is not later than a first time point, and the overlapping resource is a resource closest to the first time point, within the activity time comprised in the target configuration, wherein
the first time point is a time point related to triggering of target quantity determining, or the first time point is a time point related to triggering of target monitoring.

22. The method according to claim 18, wherein the obtaining a first resource in a target configuration comprises:
obtaining, by the terminal, second indication information, wherein
the second indication information is used to determine a measurement window that requires target monitoring and/or that is used to determine the target quantity.

23. The method according to claim 22, wherein the second indication information is used to indicate at least one of the following:
an activity time comprised in the measurement window;
a quantity of activity times comprised in the measurement window;
an activity time that requires target monitoring and/or that is used to determine the target quantity, wherein the activity time corresponds to the measurement window;
a quantity of activity times that require target monitoring and/or that are used to determine the target quantity, wherein the activity times correspond to the measurement window;
a preset activity time that requires target monitoring and/or that is used to determine the target quantity, wherein the preset activity time corresponds to the measurement window;
a start point of an activity time that requires target monitoring and/or that is used to determine the target quantity, wherein the activity time corresponds to the measurement window; and
an end point of an activity time that requires target monitoring and/or that is used to determine the target quantity, wherein the activity time corresponds to the measurement window.

24. The method according to claim 18, wherein the measurement window comprises resources belonging to a first resource pool and/or a preset resource pool.

25. The method according to claim 24, wherein the performing the first operation based on a resource that is in the measurement window and that overlaps the activity time comprises either of the following:
performing, by the terminal, the first operation based on a resource that is in the measurement window and that overlaps the activity time and belongs to the first resource pool; and
performing, by the terminal, the first operation based on a resource that is in the measurement window and that overlaps the activity time and belongs to the preset resource pool.

26. The method according to claim 18, wherein the performing the first operation based on a resource that is in the measurement window and that overlaps the activity time comprises:
determining, by the terminal, a second target quantity based on the resource that is in the measurement window and that overlaps the activity time; and
adjusting, by the terminal, the second target quantity by using a second scale factor, to obtain the target quantity.

27. The method according to claim 26, wherein
the second scale factor is a ratio between a fifth preset value and a quantity of resources within an activity time corresponding to the measurement window.

28. The method according to claim 1, wherein the first resource comprises a measurement window; and the measurement window is related to a time point related to triggering of target quantity determining, or the measurement window is related to a time point related to triggering of target monitoring; and
the measurement window satisfies at least one of the following:
starting earlier by a first preset time than the activity time comprised in the target configuration; and
ending later by a second preset time than the activity time comprised in the target configuration.

29. The method according to claim 1, wherein the first resource comprises a measurement window; and the performing a first operation based on the first resource comprises:
performing, by the terminal, target monitoring based on a resource in the measurement window, to obtain a first monitoring result; and
calculating, by the terminal, a ratio between a quantity of resources whose first monitoring results are higher or lower than a tenth preset threshold and a first quantity, to obtain the target quantity; or calculating, by the terminal, a ratio between a quantity of resources satisfying a first relationship with the first monitoring results and a first quantity, to obtain the target quantity, wherein
the first quantity is any one of the following:
a quantity of resources in the measurement window;
a quantity of resources that are in the measurement window and within the activity time;
a quantity of resources in a first measurement window; and
a quantity of resources that are in a first measurement window and within the activity time.

30. The method according to claim 29, wherein the performing target monitoring based on a resource in the measurement window, to obtain a first monitoring result comprises:
determining, by the terminal, the first monitoring result based on a resource that is in the measurement window and within the activity time.

31. The method according to claim 29 or 30, wherein in a case that the measurement window comprises the inactivity time, the calculating a ratio between a quantity of resources whose first monitoring results are higher or lower than a tenth preset threshold and a first quantity, to obtain the target quantity comprises:
calculating, by the terminal, a ratio between a quantity of resources whose first monitoring results are higher or lower than an adjusted tenth preset threshold and the first quantity, to obtain the target quantity, wherein
the adjusted tenth preset threshold is obtained by adjusting the tenth preset threshold by using a first adjustment value.

32. The method according to claim 31, wherein the tenth preset threshold is a threshold obtained by the terminal for determining the target quantity;
or
the tenth preset threshold is a threshold obtained by the terminal for determining the target quantity when the target configuration is not activated or enabled, and the adjusted tenth preset threshold is a threshold for determining the target quantity after the target configuration is activated or enabled.

33. The method according to claim 31, wherein the first adjustment value is related to a first ratio; and
the first ratio is a ratio between the activity time comprised in the target configuration and the inactivity time comprised in the target configuration.

34. The method according to claim 1, wherein the first resource comprises a measurement window; and the performing a first operation based on the first resource comprises:
performing, by the terminal, target monitoring based on a resource that is in the measurement window and within the activity time, to obtain a second monitoring result;
performing, by the terminal, target monitoring based on a resource that is in the measurement window and within the inactivity time, to obtain a third monitoring result;
determining, by the terminal, a second ratio based on the second monitoring result;
determining, by the terminal, a third ratio based on the third monitoring result; and
obtaining, by the terminal, the target value based on the second ratio and the third ratio.

35. The method according to claim 34, wherein the obtaining the target quantity based on the second ratio and the third ratio comprises:
adjusting, by the terminal, the second ratio by using a second adjustment value, and/or adjusting the third ratio by using a third adjustment value; and
obtaining, by the terminal, the target quantity based on any one of the following:
an adjusted second ratio and the third ratio;
the second ratio and an adjusted third ratio; and
an adjusted second ratio and an adjusted third ratio.

36. The method according to claim 2, wherein in a case that the terminal obtains a plurality of sets of first configurations and/or second configurations, the obtaining a first resource in a target configuration comprises:
obtaining, by the terminal, a first resource satisfying constraints of the plurality of sets of first configurations and/or second configurations.

37. The method according to claim 2, wherein in a case that the terminal obtains a plurality of sets of first configurations and/or second configurations, the performing a first operation comprises:
determining, by the terminal, one target quantity for the plurality of sets of first configurations and/or second configurations based on the first resource.

38. The method according to claim 2, wherein in a case that the terminal obtains a plurality of sets of first configurations and/or second configurations, the target configuration is a configuration that satisfies a preset condition in the plurality of sets of first configurations and/or second configurations.

39. The method according to claim 38, wherein the preset condition comprises:
the target configuration is a configuration corresponding to a resource pool in which a first object that triggers target quantity determining is located, or the target configuration is a configuration corresponding to a resource pool in which a first object that triggers target monitoring is located.

40. The method according to claim 1, wherein the target configuration is related to a feature of a first object that triggers target quantity determining or triggers target monitoring.

41. The method according to claim 39 or 40, wherein the first object comprises at least one of the following:
a service, a data packet, a media access control protocol data unit MAC PDU, data, and a transport block.

42. The method according to claim 2, wherein in a case that the terminal obtains a plurality of sets of first configurations and/or second configurations, the obtaining a first resource in a target configuration comprises:
obtaining, by the terminal, a first resource in each set of first configurations or each set of second configurations separately.

43. The method according to claim 2, wherein in a case that the terminal obtains a plurality of sets of first configurations and/or second configurations, the performing a first operation comprises:
performing, by the terminal, the first operation for each set of first configurations or each set of second configurations separately.

44. The method according to claim 2, wherein before the obtaining a first resource in a target configuration, the method further comprises either of the following:
determining, by the terminal, that simultaneous enabling of the first configuration and the second configuration is not allowed; and
determining, by the terminal, that the first resource for determining the target quantity and/or performing target monitoring satisfies a constraint of the first configuration and/or the second configuration.

45. The method according to claim 44, wherein the determining that the first resource for determining the target quantity satisfies a constraint of the first configuration and/or the second configuration comprises:
obtaining, by the terminal, constraint indication information; and
determining, by the terminal based on the constraint indication information, that the first resource for determining the target quantity and/or performing target monitoring satisfies the constraint of the first configuration and/or the second configuration.

46. The method according to claim 1, wherein after the performing a first operation based on the first resource, the method further comprises:
sending the determined target quantity, and/or sending a monitoring result obtained after target monitoring is performed.

47. The method according to claim 1, wherein the target quantity comprises at least one of the following: a channel busy rate CBR and a channel occupancy ratio CR.

48. The method according to claim 1, wherein in a case that the terminal has a plurality of transmission modes, the performing a first operation based on the first resource comprises:
separately determining the target quantity and/or performing target monitoring for at least one of the plurality of transmission modes based on the first resource.

49. An information determining apparatus, comprising:
an obtaining module, configured to obtain a first resource in a target configuration; and
a first execution module, configured to perform a first operation based on the first resource, wherein
the first operation comprises at least one of the following: performing target monitoring and determining a target quantity; and
the target configuration comprises an activity time and/or an inactivity time.

50. A terminal, comprising a processor, a memory, and a program or instructions stored in the memory and capable of running on the processor, wherein when the program or instructions are executed by the processor, the steps of the information determining method according to any one of claims 1 to 48 are implemented.

51. A readable storage medium, wherein the readable storage medium stores a program or instructions, and when the program or instructions are executed by a processor, the steps of the information determining method according to any one of claims 1 to 48 are implemented.

52. A chip, comprising a processor and a communications interface, wherein the communications interface is coupled to the processor, and the processor is configured to run a program or instructions to implement the information determining method according to any one of claims 1 to 48.
